(19) Europäisches Patentamt
European Patent Office
Office européen des brevets

(11) **EP 3 088 448 B1**

(12) **EUROPEAN PATENT SPECIFICATION**

(45) Date of publication and mention
of the grant of the patent:
**24.02.2021 Bulletin 2021/08**

(51) Int Cl.:
***B32B 5/26*** *(2006.01)*      ***B32B 5/02*** *(2006.01)*
***B32B 27/32*** *(2006.01)*     ***B29C 70/02*** *(2006.01)*

(21) Application number: **14874319.8**

(86) International application number:
**PCT/JP2014/082325**

(22) Date of filing: **05.12.2014**

(87) International publication number:
**WO 2015/098470 (02.07.2015 Gazette 2015/26)**

(54) **PREFORM, SHEET MATERIAL, AND INTEGRATED SHEET MATERIAL**

VORFORM, BLATTMATERIAL UND INTEGRIERTES BLATTMATERIAL

PRÉFORME, MATÉRIAU EN FEUILLE ET MATÉRIAU EN FEUILLE INTÉGRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2013 JP 2013270398
26.12.2013 JP 2013270399
26.12.2013 JP 2013270400**

(43) Date of publication of application:
**02.11.2016 Bulletin 2016/44**

(73) Proprietors:
• **Katholieke Universiteit Leuven
3000 Leuven (BE)**
• **Toray Industries, Inc.
Tokyo 103-8666 (JP)**

(72) Inventors:
• **VERPOEST, Ignace
B3010 Leuven (BE)**
• **BAETS, Joris
B-1840 Londerzeel (BE)**
• **TAKEBE, Yoshiki
Iyo-gun
Ehime 791-3193 (JP)**
• **MURAMATSU, Hidetaka
Nagoya-shi
Aichi 455-8502 (JP)**

• **FUJIOKA, Takashi
Iyo-gun
Ehime 791-3193 (JP)**
• **HIRANO, Noriyuki
Iyo-gun
Ehime 791-3193 (JP)**

(74) Representative: **Mewburn Ellis LLP
Aurora Building
Counterslip
Bristol BS1 6BX (GB)**

(56) References cited:
**JP-A- 2012 240 401      JP-A- 2012 240 401
US-A1- 2013 052 897**

• **TAKETA I ET AL: "Interply hybrid composites
with carbon fiber reinforced polypropylene and
self-reinforced polypropylene", COMPOSITES
PART A: APPLIED SCIENCE AND
MANUFACTURING, ELSEVIER, AMSTERDAM,
NL, vol. 41, no. 8, 1 August 2010 (2010-08-01),
pages 927-932, XP027059556, ISSN: 1359-835X
[retrieved on 2010-02-16]**
• **I. TAKETA ET AL.: 'Interply hybrid composites
with carbon fiber reinforced polypropylene and
self-reinforced polypropylene' COMPOSITES:
PART A vol. 41, no. 8, 01 August 2010, pages 927
- 932, XP027059556**

**Description**

Technical Field

This invention relates to a preform that can be used in producing a sheet-shaped material which simultaneously exhibits a high rigidity and a high impact resistance and which also exhibits high consistency; a sheet material; and a composite sheet material.

Technical Field

Fiber reinforced plastic (hereinafter abbreviated as FRP) has lightness in weight as well as excellent mechanical properties, and fibers such as organic fibers and inorganic fiber are used for the reinforcement fiber in such FRP. Of these, the preferred are carbon fibers in view of excellent specific strength, specific rigidity, and outstanding lightness in weight, and carbon fiber reinforced plastic (hereinafter abbreviated as CFRP) is a light weight material having excellent mechanical properties. CFRP has made remarkable results in sport and aircraft applications, and recently, CFRP is also used in industrial fields, for example, for windmill blade, pressure vessel, and building reinforcement material. CFRP is also gaining strong attention in automobile applications where the lightness in weight has become increasingly important.
A typical embodiment of the FRP is molded articles prepared by press molding of a preform prepared by laminating the sheet-shaped materials. The carbon fibers constituting this sheet-shaped material are typically in the form of a sheet of continuous reinforcement fibers aligned in one direction or a sheet prepared by weaving the continuous reinforcement fibers. Such molded article prepared by using a reinforcement fiber substrate exhibits high rigidity and high weight-reducing effects. However, the reinforcement by the carbon fiber also invites brittle fracture, and the article often exhibits insufficient impact resistance. Accordingly, improvement in the impact resistance properties has been attempted including use of an organic fiber for the reinforcement fiber and use of particular thermoplastic resin although such attempts have failed in realizing sufficient rigidity.
Non-Patent Document 1 discloses a technique of improving tensile strain of the carbon fiber-reinforced thermoplastic resin by using a woven fabric substrate comprising carbon fibers and a self-reinforced thermoplastic resin exhibiting self-residual stress. This technique, however, is an attempt for improving the tensile strain and the Non-Patent Document 1 is silent on the impact properties. In addition, all layers are reinforced by continuous fibers, and drawing and shaping of a curved surface are difficult.
Patent Document 1 discloses a technology of improving penetration resistance property, necessary for a bulletproof vest by using a preform comprising a combination of an aramid fiber yarn and a self-reinforced thermoplastic resin sheet. This technology, however, relies its penetration resistance property on the aramid fiber, and as a consequence, the rigidity was insufficient.
Patent Document 2 discloses a nonwoven fabric prepared by blending predetermined amount of an organic fiber and an inorganic fiber, and a composite material prepared from the nonwoven fabric by using a resin. The technology was sufficient in the impact resistance properties and rigidity but insufficient in drawability or shapability into a curved sheet due to the use of the continuous fiber.
Patent Document 3 discloses a sheet material which can be processed into complicated shapes prepared by using a mat material prepared by using discontinuous reinforced fibers and a thermoplastic resin. This technology, however, uses the discontinuous reinforced fiber for the shaping of a rib, boss, and the like, and the balance between rigidity and toughness was insufficient. JP 2012-240401 A concerns a molding material suitable for a use and a member demanding especially rigidity, impact resistance and characteristics related to protection of a human body. US 2013/0052897 A1 concerns a thermoplastic composite structure having at least one structural layer of fiber-reinforced thermoplastic resin and at least one toughening layer adjacent to a surface of the structural layer.

Prior Art Documents

Patent Documents

Patent Document 1: Patent No. 5013543
Patent Document 2: Japanese Unexamined Patent Publication (Kokai) No. 2012-139841
Patent Document 3: Japanese Unexamined Patent Publication (Kokai) No. HEI 2-231128

Non-Patent Documents

Non-Patent Document 1:
I. Taketa et al., Interply hybrid composites with carbon fiber reinforced polypropylene and self-reinforced polypropylene, Composites: Part A 41, 927-932 (2010)

Summary of the Invention

Problems to Be Solved by the Invention

In view of such problems in the technical field of the present invention, an object of the present invention is to provide a preform, a sheet material, and a composite sheet material exhibiting good balance between the impact resistance and the mechanical properties, and which is drawable or shapeable into a curved sheet.

Means for Solving the Problems

In order to solve the problems as described above, the present invention employs any of the following constitutions.

(1) A preform comprising:

(A) a self-reinforced sheet comprising (a-1) a thermoplastic resin and (a-2) a fiber or tape made of a thermoplastic resin which is the same type as the thermoplastic resin (a-1), the self-reinforced sheet (A) being reinforced with the fiber or tape (a-2); and
(B) a reinforced sheet comprising (b-1) a randomly-oriented mat of discontinuous carbon fibers and (b-2) a thermoplastic resin,

wherein
the self-reinforced sheet (A) and the reinforced sheet (B) are laminated one on another,
each thermoplastic resin serving as a matrix resin of the preform, and
wherein
in the randomly-oriented mat (b-1), the discontinuous carbon fibers are dispersed at a dispersion ratio of at least 90%, and maximum value of a relative frequency of orientation angle distribution of the discontinuous carbon fibers is less than 0.25 and minimum value of the relative frequency of the orientation angle distribution of the discontinuous carbon fibers is at least 0.090.
(2) The preform according to (1), wherein
the reinforced sheet (B) is the randomly-oriented mat (b-1) of the discontinuous carbon fibers impregnated with the thermoplastic resin (b-2).
(3) The preform according to (1), wherein
the randomly-oriented mat (b-1) of the discontinuous carbon fibers is located between the thermoplastic resin (b-2) and the self-reinforced sheet (A).
(4) The preform according to any one of (1) to (3), wherein two or more self-reinforced sheets (A), and two or more reinforced sheets (B) are laminated one on another.
(5) The preform according to any one of (1) to (4), wherein
the discontinuous carbon fiber has a mean fiber length of up to 50 mm.
(6) The preform according to any one of (1) to (5), wherein
the thermoplastic resin (b-2) constituting the reinforced sheet (B) is a resin selected from the group consisting of polyolefin resin, polyamide resin, polyarylene sulfide resin, and polyester resin.
(7) The preform according to (6), wherein
the thermoplastic resin (b-2) constituting the reinforced sheets (B) is a polyolefin resin.
(8) The preform according to any one of (1) to (7), wherein
both of the thermoplastic resin (a-1) and the fiber or tape (a-2) constituting the self-reinforced sheet (A) are respectively a polyolefin resin.
(9) The preform according to any one of (1) to (8), wherein
the thermoplastic resin (a-1) has a peak melting temperature lower than the fiber or tape (a-2).
(10) A sheet material prepared by integrating the preforms according to any one of (1) to (9) by lamination.
(11) A sheet material prepared by laminating a plurality of sheet materials according to (10).
(12) The sheet material according to (10) or (11), wherein the reinforced sheet (B) has a thickness of up to 500 $\mu$m.

(13) The sheet material prepared by integrating the sheet materials according to (10) by lamination.

(14) The sheet material according to (13), wherein
the reinforced sheet (B) has a thickness of up to 500 μm.

(15) A composite sheet material comprising:

the sheet material according to (10) or (12), and
a second sheet material.

(16) The composite sheet material according to (15), wherein
the second sheet material is a sheet containing a thermoplastic resin as its matrix resin.

(17) A composite sheet material comprising:

the sheet material according to (13) or (14), and
a second sheet material.

(18) The composite sheet material according to (17), wherein
the second sheet material is a sheet containing a thermoplastic resin as its matrix resin.

Advantageous Effect of the Invention

The preform, the sheet material, and the composite sheet material disclosed in the present invention exhibit good shapability in the processing as well as excellent balance between the impact resistance and the rigidity. More specifically, when the mean fiber length, dispersion ratio, and orientation angle distribution of the discontinuous carbon fibers in the randomly-oriented mat are satisfactory, the properties as described above will be consistent, and production of an excellent sheet material or a shaped molded article that does not require consideration of the direction of the rigidity realized by the carbon fiber in the product stage will be enabled.

Brief Description of the Drawings

[FIG. 1] FIG. 1 is a schematic view showing an embodiment of the reinforced sheets used in the preform according to the first aspect.
[FIG. 2] FIG. 2 is a schematic view showing an embodiment of the preform according to the first aspect.
[FIG. 3] FIG. 3 is a schematic view showing an exemplary dispersion of the discontinuous carbon fibers in the preform according to the first aspect.
[FIG. 4] FIG. 4 is a schematic view showing an embodiment of the laminate structure of the sheet material according to the second aspect of the present invention constituted from the reinforced sheets (B-1) comprising the randomly-oriented mat of the discontinuous carbon fibers and the thermoplastic resin film and the self-reinforced sheet (A).
[FIG. 5] FIG. 5 is a schematic view showing an embodiment of the laminate structure of the sheet material according to the second aspect of the present invention constituted from the reinforced sheets (B-2) comprising the randomly-oriented mat of the discontinuous carbon fibers impregnated with the thermoplastic resin film and the self-reinforced sheet (A).
[FIG. 6] FIG. 6 is a schematic view showing the laminate structure of the sheet material formed by integrating the reinforced sheets (B-1) or (B-2) and the self-reinforced sheet (A) having the laminate structure shown in FIG. 4 or 5.
[FIG. 7] FIG. 7 is a schematic view of the sheet material comprising the sheet material according to the second aspect of the present invention having a film of the adhesive resin (C) adhered thereto.
[FIG. 8] FIG. 8 is a schematic view showing an embodiment of the composite sheet material which is a variation of the second aspect of the present invention.
[FIG. 9] FIG. 9 is a perspective view showing the tensile shear test piece used in the Examples, the Reference Examples and Comparative Examples.
[FIG. 10] FIG. 10 is a schematic view of the preform produced in the Examples comprising the laminate of a self-reinforced sheet (A) and the reinforced sheets (B) comprising the randomly-oriented mat (b-1) of the discontinuous carbon fibers and the thermoplastic resin (b-2).
[FIG. 11] FIG. 11 is a schematic view of the preform produced in the Examples comprising the laminate of a self-reinforced sheet (A) and the reinforced sheets (B) comprising the randomly-oriented mat (b-1) of the discontinuous carbon fibers and the thermoplastic resin (b-2).
[FIG. 12] FIG. 12 is a schematic view of the preform produced in the Examples wherein the laminate has the randomly-oriented mat (b-1) as the outermost layers.

[FIG. 13] FIG. 13 is a schematic view of the preform produced in the Examples wherein the laminate has the thermoplastic resin (b-2) constituting the reinforced sheet as the outermost layers.

Description of Preferred Embodiments

(Aspect 1)

The first aspect of the present invention is a preform wherein the matrix resin is a thermoplastic resin, and wherein the following (A) and (B) are laminated one on another:

(A) a self-reinforced sheet comprising (a-1) a thermoplastic resin, and (a-2) a fiber or tape made of a thermoplastic resin which is the same type as the thermoplastic resin (a-1), the self-reinforced sheet (A) being reinforced with the fiber or tape (a-2); and

(B) a reinforced sheet comprising (b-1) a randomly-oriented mat of the discontinuous carbon fibers and (b-2) a thermoplastic resin.

Next, the preform according to the first aspect of the present invention is described in detail.

The self-reinforced sheet (A) constituting the preform according to the first aspect of the present invention is a self-reinforced sheet prepared by using a thermoplastic resin for the matrix resin, and reinforcing the matrix resin with a fiber or tape (a-2) comprising the thermoplastic resin which is the same type as the thermoplastic resin (a-1) used for the matrix resin. The self-reinforced material is a composite material wherein the reinforcement fiber and the matrix resin are made of the same resin as described in the Non-Patent Document 1.

The self-reinforced sheet (A) used in the first aspect of the present invention may be a commercially available sheet. Exemplary such sheets include "Curv" (registered trademark) manufactured by Propex Fabrics GmbH and "Pure" (registered trademark) manufactured by Lankhorst Pure Composites b.v.

The self-reinforced sheet (A) constituting the first aspect of the present invention comprises the thermoplastic resin (a-1) and the fiber or tape (a-2), and the thermoplastic resin (a-1) preferably has a peak melting temperature lower than the fiber or tape (a-2) . When the peak melting temperature of the thermoplastic resin (a-1) is lower than the fiber or tape (a-2), the fiber or tape (a-2) can be integrated with the matrix resin thermoplastic resin (a-1) without complete melting of the fiber or tape (a-2). This enables formation of the self-reinforced sheet (A) with no adverse effects on the properties of the fiber or tape (a-2). The difference in the melting temperature between the fiber or tape (a-2) and the thermoplastic resin (a-1) can be realized, for example, by stretching and orienting the thermoplastic resin of the fiber or tape (a-2) in the production of the fiber or tape (a-2) to thereby produce the fiber or tape comprising the oriented thermoplastic resin.

The peak melting temperature of each of the fiber or tape (a-2) and the thermoplastic resin (a-1) constituting the self-reinforced sheet (A) can be measured by the procedure as described below. First, the self-reinforced sheet (A) is separated into the fiber or tape (a-2) and the thermoplastic resin (a-1) by peeling the fiber or tape (a-2) from the surface on the side of the fiber or tape of the self-reinforced sheet (A) by using a razor. The peak value of the melting temperature is then measured according to "Testing methods for transition temperatures of plastics" defined in JIS K7121 (1987) for the fiber or tape (a-2) and the thermoplastic resin (a-1). The sample for the measurement used is the one which has been dried in a vacuum dryer with the furnace interior temperature controlled to 50°C for at least 24 hours, and the melting temperature according to the standard as described above is measured by a differential scanning calorimeter to thereby use the peak top temperature for the peak melting temperature.

The form of the fiber or tape (a-2) used in the self-reinforced sheet (A) according to the second aspect of the present invention is not particularly limited as long as the self-reinforced sheet (A) is formed. Exemplary forms include woven fabric and a fabric of continuous fibers aligned in one direction which has been bonded by a fiber-fixing agent, and the preferred is the woven fabric in view of the productivity and handling convenience.

The fiber or tape (a-2) and the thermoplastic resin (a-1) used in the self-reinforced sheet (A) according to the first aspect of the present invention are not limited as long as they comprise the same type of the thermoplastic resin. Exemplary such resins include thermoplastic resins selected from polyolefins such as polyethylene (PE) and polypropylene (PP), crystalline resins such as polyethylene terephthalate (PET), polyamide (PA), and polyphenylene sulfide (PPS), copolymers and modification products thereof. Of these, the preferred are polypropylene resins in view of the lightness, polyamide resins in view of rigidity, and polyarylene sulfide in view of the heat resistance of the resulting sheet material.

The thermoplastic resins as mentioned above as exemplary thermoplastic resins (a-1) used in the self-reinforced sheet (A) may have an elastomer or a rubber component added thereto to the extent not adversely affecting the merits of the present invention.

Next, the reinforced sheet (B) according to the first aspect of the present invention is described.

The reinforced sheet (B) according to the first aspect of the present invention is a reinforced sheets (B-1) composed of the randomly-oriented mat (b-1) of the discontinuous carbon fibers and the film of the thermoplastic resin (b-2) or the reinforced sheets (B-2) composed of the randomly-oriented mat (b-1) of the discontinuous carbon fibers impregnated with the film of the thermoplastic resin (b-2) . The "randomly-oriented mat (b-1)" as used herein is a planar body composed of randomly-oriented discontinuous carbon fibers.

The randomly-oriented mat (b-1) of the discontinuous carbon fibers is in the form of strands and/or single fibers of the carbon fiber dispersed in plane form, and the examples include chopped strand mat, paper screen mat, carding mat, and air laid mat. A strand is an assembly of a plurality of single fibers aligned in parallel. In the dispersion of single fibers in the form of the randomly-oriented mat (b-1), the single fibers are generally dispersed with no regularity. When the fibers are in such form of randomly-oriented mat (b-1), the mat will be provided with high shapability into the shape used for the index of the shaping processability, and hence, the mat will be easily shapable into complicated shapes.

The randomly-oriented mat (b-1) comprising the discontinuous carbon fibers is more preferably in the form of a plane body wherein the discontinuous carbon fibers are dispersed substantially as single fibers. The dispersion "substantially as single fibers" as used herein means that the discontinuous carbon fibers constituting discontinuous carbon fibers contain at least 50% by weight of the fine strands each comprising less than 100 filaments. When such discontinuous carbon fibers are dispersed substantially as single fibers, starting point of the fracture will be consistently distributed to realize a stable rigidity. In the meanwhile, the mat often undergoes a fracture from the ends of the strands comprising a large number of filaments thereby loosing rigidity and reliability. In view of such situation, the discontinuous carbon fibers preferably contains at least 70% by weight of the fine strands each comprising less than 100 filaments.

In the first aspect of the present invention, examples of the preferable carbon fiber constituting the randomly-oriented mat (b-1) of the discontinuous carbon fibers include carbon fibers such as polyacrylonitrile (PAN) fiber, rayon fiber, lignin fiber, pitch carbon fiber, and graphite fiber. Of these, the more preferred are PAN carbon fibers. The fiber may also be any of such fibers having their surface treated. Exemplary surface treatments include a treatment with a sizing agent, a treatment with a binder, and adhesion of an additive.

The discontinuous carbon fibers constituting the randomly-oriented mat (b-1) may preferably have a mean fiber length Lw (mean fiber length Lw is mass mean fiber length Lw) of up to 50 mm. When the mass mean fiber length Lw is in such range, adjustment of the two-dimensional contact angle of the discontinuous carbon fibers in the randomly-oriented mat (b-1) as described below will be easier.

The mass mean fiber length Lw can be measured by the procedure as described below. The sheet-shaped material obtained from the preform according to the first aspect of the present invention or the shaped material is immersed in a solvent to dissolve the thermoplastic resin to separate the discontinuous carbon fiber, or alternatively, the material is heated to remove the thermoplastic resin component by firing to separate the discontinuous carbon fiber. 400 fibers are randomly selected from the separated discontinuous carbon fibers, and the length Li of the carbon fiber is measured at a unit of 10 $\mu$m. By using the mass fraction Wi of each carbon fiber when the mass of the 400 carbon fibers whose length has been measured is assumed as 100%, the mass mean fiber length Lw is calculated on the basis of the mass mean. The mass mean fiber length Lw of the discontinuous carbon fibers constituting the randomly-oriented mat (b-1) according to the first aspect of the present invention is preferably up to 50 mm, and more preferably up to 25 mm in view of the ease of the adjustment of the two-dimensional contact angle as described below. The mass mean fiber length Lw is represented by the following equation:

$$Lw = \Sigma(Li \times Wi) \quad (unit: mm)$$

Li: fiber length measured (i = 1, 2, 3, ... 400) (unit: mm)
Wi: mass fraction of the carbon fiber having the fiber length Li (i = 1, 2, 3, ... 400) (unit: % by weight).

Examples of the thermoplastic resin (b-2) of the reinforced sheets (B) in the first aspect of the present invention include thermoplastic resins selected from polyolefins such as polyethylene (PE) and polypropylene (PP), crystalline resins such as polyethylene terephthalate (PET), polyamide (PA), and polyphenylene sulfide (PPS), and copolymers and modification products thereof. Of these, the preferred are polypropylene resins in view of the lightness, polyamide resins in view of rigidity, and polyarylene sulfide in view of the heat resistance of the resulting sheet material.

In the preform according to the first aspect of the present invention, the thermoplastic resin (b-2) constituting the reinforced sheets (B) and the thermoplastic resin (a-1) constituting the self-reinforced sheet (A) are not particularly limited. However, each thermoplastic resin may preferably melt or soften at the molding temperature when the preform according to the first aspect of the present invention are integrated. When such resins are selected, the randomly-oriented mat (b-1) will be impregnated with the thermoplastic resins (b-2) and (a-1) and the intervening randomly-oriented mat (b-1) will establish firm mechanical bonding between the self-reinforced sheet (A) and the reinforced sheets (B) . In the preform according to the first aspect of the present invention, it is preferable that all of the thermoplastic resin (b-2) constituting the reinforced sheets (B) and the thermoplastic resin (a-1) and the fiber or tape (a-2) constituting the self-reinforced sheet (A) are a polyolefin resin.

The thermoplastic resins (b-2) as mentioned above as exemplary thermoplastic resins used in the self-reinforced sheet (B) may have an elastomer or a rubber component added thereto to the extent not adversely affecting the merits of the present invention.

When a polyolefin resin is used for the thermoplastic resins (a-1) and (b-2) constituting the self-reinforced sheet (A) and the reinforced sheets (B), the polyolefin resin preferably contains a reactive functional group in view of the adhesiveness, and it is preferably a polyolefin resin modified with at least one member selected from carboxyl group, acid anhydride group, hydroxy group, epoxy group, amino group, and carbodiimide group. The particularly preferred are polyolefin resins modified with an acid anhydride group. When a polyamide resin is used for the thermoplastic resins (a-1) and (b-2) constituting the self-reinforced sheet (A) and the reinforced sheets (B), the polyamide resin is preferably a copolymer in view of the melting point and adhesion. Of such copolymer, the preferred are three component copolymerization polyamide resins. Exemplary preferable polyamide resins which are preferable for the thermoplastic resins (a-1) and (b-2) constituting the self-reinforced sheet (A) and the reinforced sheets (B) include polyamide 12, polyamide 610, and polyamide 6/66/610, and the most preferred is the three component copolymer 6/66/610 in view of the adhesion.

Exemplary methods used in producing the randomly-oriented mat (b-1) of the discontinuous carbon fibers according to the first aspect of the present invention include known processes such as dry processes, for example, air laid process wherein discontinuous carbon fibers are dispersed and formed into a mat by an air stream, and carding process wherein the carbon fibers are mechanically scraped out to form a mat from the fibers, and wet processes by radlite process wherein the carbon fibers are agitated in water and then formed into a mat by paper making process. In particular, the discontinuous carbon fiber used in the present invention is preferably produced by wet process in view of the good filament dispersion.

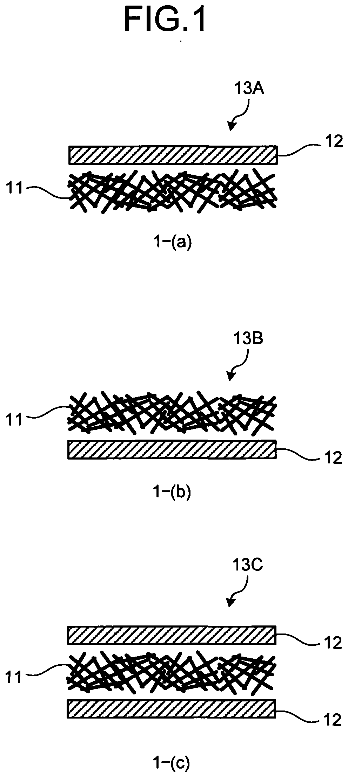

In an exemplary method for producing the reinforced sheets (B), a randomly-oriented mat (b-1) having the discontinuous carbon fibers dispersed in single fiber state may be preliminarily prepared, and a film-shaped thermoplastic resin (b-2) may be laminated on the resulting randomly-oriented mat (b-1) of the discontinuous carbon fibers in thickness direction. The laminate structure may be adequately changed depending on the desired balance between the impact properties and the rigidity and intended application to the extent not adversely affecting the merits of the present invention. For example, a film-shaped thermoplastic resin 12 may be disposed on a randomly-oriented mat 11 of the discontinuous carbon fibers to form a reinforced sheets 13A as shown in FIG. 1-(a), or on the contrary, the randomly-oriented mat 11 of the discontinuous carbon fibers may be disposed on the film-shaped thermoplastic resin 12 to form a reinforced sheets 13B as shown in FIG. 1-(b). Alternatively, the film-shaped thermoplastic resin 12 may be disposed on opposite surfaces in thickness direction of the randomly-oriented mat 11 of the discontinuous carbon fibers to form a reinforced sheet 13C as shown in FIG. 1-(c). In other words, for the reinforced sheets (B), the preferable methods are those wherein the randomly-oriented mat (b-1) of the discontinuous carbon fibers and the film-shaped thermoplastic resin (b-2) are alternatively laminated or laminated so that they are symmetrical in thickness direction since the only requirement is that the film-shaped thermoplastic resin (b-2) is laminated to correspond to the desired volume ratio of the discontinuous carbon fiber, and in view of facilitating the impregnation of the film-shaped thermoplastic resin (b-2) in the randomly-oriented mat (b-1) of the discontinuous carbon fibers.

In the reinforced sheet (B) according to the first aspect of the present invention, the thermoplastic resin (b-2) may also be impregnated in the randomly-oriented mat (b-1) of the discontinuous carbon fibers. The methods used for the impregnation include a method using the randomly-oriented mat (b-1) of the discontinuous carbon fibers wherein a pressure is applied while heating the film-shaped thermoplastic resin (b-2) to a temperature equal to or higher than its melting or softening temperature to thereby impregnate the molten thermoplastic resin (b-2) into the randomly-oriented mat (b-1) of the discontinuous carbon fibers to obtain the sheet-shaped reinforced sheets (B-2) of the first aspect of the present invention. Exemplary methods include a method as shown in FIGS. 1-(a) and 1-(b) wherein a randomly-oriented mat 11 of the discontinuous carbon fibers having a film-shaped thermoplastic resin 12 disposed thereon on one side of the thickness direction is heated to a temperature at which the thermoplastic resin 12 can be melted, and a pressure is simultaneously applied for impregnation of the resin, and a method as shown in FIG. 1-(c) wherein the randomly-oriented mat 11 comprising the discontinuous carbon fiber is sandwiched between the film-shaped thermoplastic resins 12 and a pressure is applied at a temperature at which the thermoplastic resin 12 can be melted and a pressure is simultaneously applied for impregnation of the resin.

The volume ratio of the discontinuous carbon fibers in the reinforced sheets (B) is preferably in the range of 10 to 40% by volume in view of improving the balance of rigidity, impact resistance, and shaping processability, and more preferably in the range of 15 to 30% by volume and still more preferably 15 to 25% by weight in consideration of the shaping processability.

Examples of the preferable installation used for realizing the reinforced sheets (B-2) comprising the randomly-oriented mat (b-1) impregnated with the thermoplastic resin (b-2) include compression pressing machine, double belt press, and calendar roll. The former may be used for batchwise production, and the productivity can be improved by using an intermittent pressing system wherein two machines, namely, a heater machine and a cooling machine which are aligned in parallel. The latter may be used for continuous production, and in such case, roll to roll processing can be readily conducted thereby realizing an improved continuous productivity.

In the preform according to the first aspect of the present invention, the preferable arrangement is such that the randomly-oriented mat (b-1) of the discontinuous carbon fibers is disposed between the thermoplastic resin (b-2) and the self-reinforced sheet (A). Such arrangement enables production of a sheet-shaped material and a shaped sheet-shaped material wherein both of the thermoplastic resin (b-2) and the thermoplastic resin (a-1) constituting the self-reinforced sheet (A) will be impregnated in the randomly-oriented mat (b-1) of the discontinuous carbon fibers, and this enables reinforcement by fiber between the layers of the reinforced sheets (B) and the self-reinforced sheet (A). This enables the sheet-shaped material and the shaped sheet-shaped material to exhibit high mechanical properties. More specifically, since the layers are integrated by the randomly-oriented mat (b-1) of the discontinuous carbon fibers, the thermoplastic resin (b-2) and the thermoplastic resin (a-1) and the fiber or tape (a-2) constituting the self-reinforced sheet (A) can be integrated even if they do not comprise the same type of the thermoplastic resin.

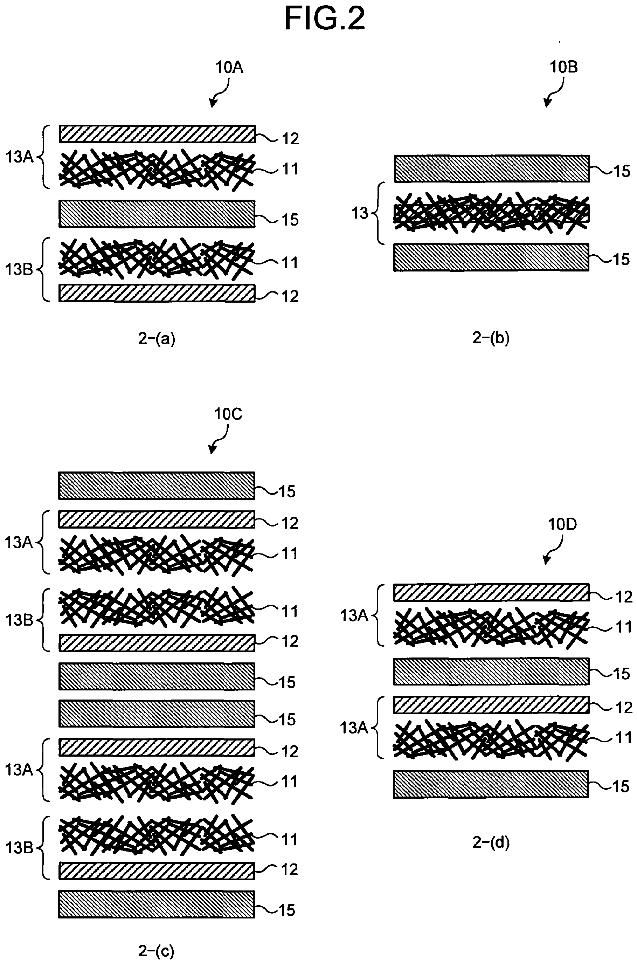

In the preform according to the first aspect of the present invention, the preform is preferably the one comprising a plurality of each of the self-reinforced sheet (A) and the reinforced sheets (B). Exemplary such preforms include a preform 10A wherein reinforced sheets 13A and 13B are disposed as the outermost layers and the self-reinforced sheet 15 is disposed as the inner layer as shown in FIG. 2-(a) and a preform 10B having a sandwich laminate structure (three layer structure) wherein the self-reinforced sheets 15 are disposed as the outermost layers and a reinforced sheet 13 comprising a randomly-oriented mat of the discontinuous carbon fibers having the thermoplastic resin impregnated therein is disposed as the inner layer as shown in FIG. 2-(b). The number of layers in such case is not particularly limited, and the number of layers is preferably up to 30 and more preferably up to 20 in view of the handling convenience in the lamination step. In addition, as shown in FIG. 2-(c) for the preform 10C according to the first aspect of the present invention, alternate lamination of the reinforced sheet 13A and/or 13B and the self-reinforced sheet 15 is not necessary, and the laminate structure may be adequately changed depending on the desired balance between the impact properties and the rigidity and intended application to the extent not adversely affecting the merits of the present invention. For example, when the impact resistance is to be realized by one outermost layer and the strength is to be realized by the other outermost layer, the preform may be a preform 10D as shown in FIG. 2-(d) having a laminate structure which is asymmetrical in the thickness direction with the self-reinforced sheet 15 having the excellent impact resistance disposed on the side of one outermost layer and the reinforced sheets 13A having the excellent mechanical properties disposed on the side of the other outermost layer. In view of the warping of the resulting molded article, the preferable method is the one wherein the layers are symmetrically disposed in the thickness direction. The same applies for the laminate structure of the randomly-oriented mat (b-1) and the thermoplastic resin (b-2) constituting the reinforced sheets (B) and the thermoplastic resin (a-1) and the fiber or tape (a-2) constituting the self-reinforced sheet (A).

In the preform according to the first aspect of the present invention, the discontinuous carbon fibers in the randomly-oriented mat (b-1) is dispersed at a dispersion ratio of at least 90%. When the dispersion ratio of the discontinuous carbon fibers is at least 90%, the preform will exhibit excellent mechanical properties and high impact resistance since most carbon fibers will be present in the state of the single fiber and the carbon fibers having high aspect ratio will be uniformly distributed.

In the first aspect of the present invention, dispersion ratio of the discontinuous carbon fibers is the percentage in number of the carbon fiber single fibers wherein the two-dimensional contact angle is at least 1° when the two-dimensional contact angle formed between the single fiber of the discontinuous carbon fiber and another single fiber of the discontinuous carbon fiber that is in contact with the discontinuous carbon fiber is measured from the side of the acute angle (0° to 90°) .

The dispersion ratio of least 90% enables effective utilization of the strength and the modulus of the carbon fibers, and this leads to the improvement of the mechanical properties. Such dispersion ratio also facilitates impregnation of the thermoplastic resin (b-2) into the randomly-oriented mat (b-1), and the risk of void formation is thereby reduced. More preferably, the carbon fibers are dispersed at a dispersion ratio of at least 96%.

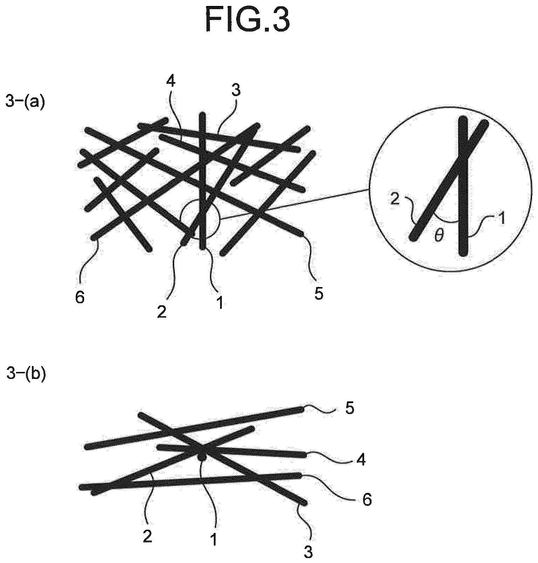

The "two-dimensional contact angle of the discontinuous carbon fibers" is defined as an angle formed between a single fiber of the discontinuous carbon fibers of the randomly-oriented mat (b-1) of the discontinuous carbon fibers and another single fiber of the discontinuous carbon fibers that is in contact with the discontinuous carbon fibers, and which is the acute angle (at least 0° and up to 90°) of the angles formed between the single fibers in contact with each other. This two-dimensional contact angle is described in further detail by referring to the drawings. FIGS. 3-(a) and 3-(b) are schematic views of embodiments of the present invention, and wherein fibers in the randomly-oriented mat are observed in the plane direction (FIG. 3-(a)) and the thickness direction (FIG. 3-(b)). In FIGS. 3-(a) and 3-(b), 1, 2, 3, 4, 5, and 6 are respectively a discontinuous carbon fiber (single fiber). When the two-dimensional contact angles formed between the single fiber 1 and other single fibers in contact with the single fiber 1 in FIGS. 3-(a) and 3-(b) are measured, the single fiber 1 is observed in FIG. 3-(a) in the state crossing with the single fibers 2 to 6, but in FIG. 3-(b), in the state not in contact with the single fibers 5 and 6. Accordingly, the two-dimensional contact angles evaluated for the single fiber (standard fiber) 1 are single fibers 2 to 4, and angles respectively formed between the single fibers 1 and 2, the single fibers 1 and 3, and the single fibers 1 and 4 are measured. The two-dimensional contact angle formed between the single fiber 1 and the single fiber 2 is the angle θ which is the acute angle (at least 0° and up to 90°) of the two angles formed between the single fibers 1 and 2. The fiber dispersion ratio is represented by the following equation:

$$P = n/N \times 100 \ (unit:\ \%)$$

P: fiber dispersion ratio
n: total number of carbon fiber single fiber the contact angle of at least 1°,
N: total number of carbon fiber single fibers whose contact angle was measured

The method used for measuring two-dimensional contact angle of the discontinuous carbon fibers constituting the reinforced sheets (B) is not particularly limited. However, the measurement is preferably conducted in the area nearest to the center of the material and in the area having a consistent thickness, and not in the area near the edge of the material.

An exemplary method for measuring the two-dimensional contact angle is observation of the discontinuous carbon fiber in the randomly-oriented mat (b-1) of the discontinuous carbon fibers or the reinforced sheets (B-2) comprising the randomly-oriented mat (b-1) having the thermoplastic resin (b-2) impregnated therein by using a light beam transmitting therethrough. For example, a method that can be used in the case of the reinforced sheets (B-2) is observation of the carbon fiber from the surface of the thin slice of the sheet, and the observation of the carbon fiber will then be easier. In this case, the observation of the carbon fiber will be even easier if the surface of the reinforced sheets (B-2) is polished to expose the discontinuous carbon fiber.

In the preform according to the first aspect of the present invention, the discontinuous carbon fibers constituting the randomly-oriented mat (b-1) have the maximum value of the relative frequency of the distribution of the two-dimensional orientation angle of less than 0.25, and the minimum value of the relative frequency of the distribution of the two-dimensional orientation angle of at least 0.090 in view of the consistency of the mechanical properties and impact resistance properties. The term "relative frequency of the two-dimensional orientation angle of the discontinuous carbon fiber" is an index of the distribution of the two-dimensional orientation angle of the discontinuous carbon fibers.

In the first aspect of the present invention, the frequency distribution at an increment of 30° of the two-dimensional orientation angle of the discontinuous carbon fiber constituting the random mat (b-1) is calculated by randomly selecting 400 single fibers of the discontinuous carbon fiber from the discontinuous carbon fibers in the randomly-oriented mat (b-1) of the discontinuous carbon fibers or the reinforced sheets (B-2) comprising the randomly-oriented mat (b-1) having the thermoplastic resin (b-2) impregnated therein, arbitrarily setting one standard straight line for use as the standard of the angle, and measuring all of the angles of two-dimensional orientation direction (hereinafter abbreviated as orientation angle $\alpha_i$) of the selected discontinuous carbon fibers in relation to the standard straight line. The two-dimensional orientation angle $\alpha_i$ measured was the angle in counter clockwise from the standard straight line in the range of at least 0° and less than 180°. The two-dimensional orientation angle $\alpha_i$ of the 400 single fibers of the discontinuous carbon fiber from the standard line was used to depict the relative frequency distribution at an increment of 30° of the two-dimensional orientation angle of the discontinuous carbon fiber, and the maximum value and the minimum value were used for the maximum value and the minimum value of the frequency distribution at an increment of 30° of the two-dimensional orientation angle of the discontinuous carbon fiber.

When the number of the randomly selected discontinuous carbon fibers is at least 400, the maximum value and the minimum value in the relative frequency at an increment of 30° in the frequency distribution of the two-dimensional orientation angle of the carbon fiber will be substantially constant. The measurement area of the maximum value and the minimum value in the relative frequency at an increment of 30° in the frequency distribution of the two-dimensional orientation angle of the discontinuous carbon fiber is not particularly limited. However, the measurement is preferably conducted in the area nearest to the center of the material and in the area having a consistent thickness, and not in the area near the edge of the material. When the maximum value and the minimum value in the relative frequency at an increment of 30° in the frequency distribution of the two-dimensional orientation angle of the discontinuous carbon fiber is 0.17, the randomly-oriented mat (b-1) of the discontinuous carbon fibers or the carbon fibers in the reinforced sheets (B) are in completely random arrangement. The two-dimensional orientation angle $\alpha_i$ measured was the angle in counter clockwise from the standard straight line in the range of at least 0° and less than 180°. The relative frequency of this orientation angle $\alpha_i$ at the increment of 30° was calculated by the following equation:

$$\text{Maximum value of the relative frequency} = N_{MAX}/400$$

$$\text{Minimum value of the relative frequency} = N_{MIN}/400$$

$\alpha_i$: two-dimensional orientation angle measured (i = 1, 2, ..., 400)

- N30: number of carbon fibers having the orientation angle $\alpha_i$ of at least 0° and less than 30°
- N60: number of carbon fibers having the orientation angle $\alpha_i$ of at least 30° and less than 60°
- N90: number of carbon fibers having the orientation angle $\alpha_i$ of at least 60° and less than 90°
- N120: number of carbon fibers having the orientation angle $\alpha_i$ of at least 90° and less than 120°
- N150: number of carbon fibers having the orientation angle $\alpha_i$ of at least 120° and less than 150°
- N180: number of carbon fibers having the orientation angle $\alpha_i$ of at least 150° and less than 180°.
- $N_{MAX}$: maximum value of the N30 to N180
- $N_{MIN}$: minimum value of the N30 to N180

More specifically, an exemplary method used for measuring the two-dimensional orientation angle for the randomly-oriented mat (b-1) of the discontinuous carbon fibers and the reinforced sheets (B-1) comprising the randomly-oriented, mat (b-1) of the discontinuous carbon fibers having the thermoplastic resin (b-2) impregnated therein is observation of the orientation of the discontinuous carbon fibers from the surface. In the case of a sheet-shaped reinforced sheets (B-2), the sheet surface is preferably polished to expose the discontinuous carbon fiber to facilitate the observation of the carbon fiber. Another exemplary method is observation of the carbon fiber orientation of the randomly-oriented mat (b-1) or the sheet-shaped reinforced sheets (B-2) by using a light beam transmitting therethrough. In the case of the sheet-shaped reinforced sheets (B-2), use of a thin slice of the sheet is preferable to facilitate observation of the carbon fiber.

When the measurement by the methods as described above is difficult, the observation may be conducted by a method wherein the thermoplastic resin (b-2) is removed without destroying the structure of the randomly-oriented mat (b-1) of the discontinuous carbon fibers in the reinforced sheets (B-2), and observing the orientation of discontinuous carbon fiber. For example, the reinforced sheets (B-2) may be sandwiched between 2 stainless steel meshes, and after securing the randomly-oriented mat (b-1) of the discontinuous carbon fibers with screws or the like, the thermoplastic resin (b-2) may be removed by firing and the resulting randomly-oriented mat (b-1) may be observed with an optical microscope for measurement.

When the reinforced sheets (B) constituting the preform according to the first aspect of the present invention is the reinforced sheets (B-2) comprising the randomly-oriented mat (b-1) having the thermoplastic resin (b-2) impregnated therein, the thickness of the reinforced sheets (B-2) is preferably up to 500 $\mu$m. When the thickness of the reinforced sheets (B-2) is up to 500 $\mu$m, freedom in designating the laminate structure of the sheet material will be improved in the molding of the sheet material, and the adjustment of the balance between the mechanical properties and the impact resistance of the sheet material will be enabled. More preferably, the thickness of the reinforced sheets (B-2) is up to 300 $\mu$m.

Examples of the method used for molding the preform according to the first aspect of the present invention into a sheet-shaped material or a shaped material include press molding using a press having a mechanism of applying heat and pressure such as hot press molding, stamping molding, and heat and cool molding. Of these press molding methods, the preferred are stamping molding and heat and cool molding in view of improving the productivity by shortening the molding cycle.

The preform according to the first aspect of the present invention may further comprise a filler, conductivity imparting material, flame retardant, pigment, dye, lubricant, mold release agent, compatibilizing agent, dispersant, nucleating agent, plasticizer, thermal stabilizer, antioxidant, anti-coloring agent, UV absorbent, flowability improving agent, foaming agent, antimicrobial agent, damping agent, deodorant agent, slidability improving agent, antistatic agent, and the like depending on the application.

The sheet material and the shaped material prepared by molding using the preform according to the first aspect of the present invention can be used as a component of various members and parts, for example electric and electronic parts, structural parts for automobiles and bicycles, air craft parts, and everyday item. In view of the mechanical properties, the sheet material and the shaped material prepared by molding using the preform of the present invention are preferable for use in automobile interior and exterior materials, electric and electronic housing, and everyday item.

(Second aspect of the present invention)

The second aspect of the present invention is a sheet material having a thermoplastic resin as its matrix resin, wherein

(A) self-reinforced sheet (s) comprising a thermoplastic resin (a-1) reinforced with a fiber or a tape (a-2) comprising the same type of the thermoplastic resin, and
(B) reinforced sheet(s) comprising a randomly-oriented mat (b-1) of discontinuous carbon fibers are laminated for integration.

The sheet material according to the second aspect of the present invention has good balance between the mechanical properties and the impact resistance as well as excellent shapability. The term "mechanical properties" as used herein in the second aspect of the present invention are physical property values of the material such as modulus and strength obtained in static mechanical test which are different from the impact resistance obtained in a dynamic mechanical test.

The self-reinforced sheet (A) constituting the sheet material according to the second aspect of the present invention is, as in the case of the first aspect of the present invention, prepared by using a thermoplastic resin (a-1) for the matrix resin, and reinforcing the matrix resin with a fiber or tape (a-2) comprising the thermoplastic resin which is the same type as the thermoplastic resin (a-1) used for the matrix resin. The self-reinforced material is a composite material wherein the reinforcement fiber and the matrix resin are made of the same resin as described in the Non-Patent Document 1.

The self-reinforced sheet (A) used in the second aspect of the present invention may be the same as those used in the self-reinforced sheet (A) used in the first aspect of the present invention.

As in the case of the first aspect of the present invention, the self-reinforced sheet (A) according to the second aspect of the present invention comprises the fiber or tape (a-2) and the thermoplastic resin (a-1) which is the matrix resin, and the thermoplastic resin (a-1) preferably has a peak melting temperature lower than the fiber or tape (a-2). When the peak melting temperature of the thermoplastic resin (a-1) is lower than the fiber or tape (a-2), the fiber or tape (a-2) can be integrated with the matrix resin thermoplastic resin (a-1) without complete melting of the fiber or tape (a-2). This enables formation of the self-reinforced sheet (A) with no adverse effects on the properties of the fiber or tape (a-2). The difference in the melting temperature between the fiber or tape (a-2) and the thermoplastic resin (a-1) can be realized, for example, by stretching and orienting the thermoplastic resin of the fiber or tape (a-2) in the production of the fiber or tape (a-2) to thereby produce the fiber or tape comprising the oriented thermoplastic resin.

The peak melting temperature of each of the fiber or tape (a-2) and the thermoplastic resin (a-1) constituting the self-reinforced sheet (A) can be measured by the same procedure as the first aspect of the present invention.

The form of the fiber or tape (a-2) used in the self-reinforced sheet (A) according to the second aspect of the present invention is not particularly limited as long as the self-reinforced sheet (A) is formed. Exemplary forms include woven fabric and a fabric of continuous fibers aligned in one direction which has been bonded by a fiber-fixing agent, and the preferred is the woven fabric in view of the productivity and handling convenience.

The fiber or tape (a-2) and the thermoplastic resin (a-1) used in the self-reinforced sheet (A) according to the second aspect of the present invention are not limited as long as they comprise the same type of the thermoplastic resin. Exemplary such resins include thermoplastic resins selected from polyolefins such as polyethylene (PE) and polypropylene (PP), crystalline resins such as polyethylene terephthalate (PET), polyamide (PA), and polyphenylene sulfide (PPS), and copolymers and modification products thereof. Of these, the preferred are polypropylene resins in view of the lightness, polyamide resins in view of rigidity, and polyarylene sulfide in view of the heat resistance of the resulting sheet material.

The thermoplastic resins as mentioned above as exemplary thermoplastic resins used in the self-reinforced sheet (A) may have an elastomer or a rubber component added thereto to the extent not adversely affecting the merits of the present invention.

The reinforced sheet (B) according to the second aspect of the present invention is a reinforced sheets (B-1) composed of the randomly-oriented mat (b-1) of the discontinuous carbon fibers and the film (b-2) of the thermoplastic resin or the reinforced sheets (B-2) composed of the randomly-oriented mat (b-1) of the discontinuous carbon fibers impregnated with the film (b-2) of the thermoplastic resin. The discontinuous carbon fibers used may be chopped carbon fibers prepared by cutting the continuous carbon fibers. The "randomly-oriented mat (b-1)" as used herein is a planar body composed of randomly-oriented discontinuous carbon fiber.

The randomly-oriented mat (b-1) is more preferably in the form of a plane body wherein the discontinuous carbon fibers are dispersed substantially as single fibers. The dispersion "substantially as single fibers" as used herein means that the discontinuous carbon fibers constituting the randomly-oriented mat (b-1) contain at least 50% by weight of the strands each comprising less than 100 filaments. When the discontinuous carbon fibers are dispersed substantially as single fibers, starting point of the fracture will be consistently distributed to realize a stable rigidity. In the meanwhile, the mat often undergoes a fracture from the ends of the strands comprising 100 or more filaments thereby loosing rigidity and reliability. In view of such situation, the discontinuous carbon fibers preferably contain at least 70% by weight of the strands each comprising less than 100 filaments.

The randomly-oriented mat (b-1) constituting the reinforced sheets (B-1) and (B-2) according the second aspect of the present invention is in the form of strands and/or single fibers of the carbon fiber dispersed in plane form, and the examples include chopped strand mat, paper screen mat, carding mat, and air laid mat. A strand is an assembly of a plurality of single fibers aligned in parallel. In the dispersion of single fibers in the form of the randomly-oriented mat (b-1), the strands and/or the single fibers are generally dispersed with no regularity. When the fibers are in such form of randomly-oriented mat (b-1), the mat will be provided with high shapability into the shape used for the index of the shaping processability, and hence, the mat will be easily shapable into complicated shapes.

In the reinforced sheets (B-1) and (B-2) according to the second aspect of the present invention, the carbon fiber and the thermoplastic resin (b-2) constituting the randomly-oriented mat (b-1) used may be the same as those of the first aspect of the present invention. In the sheet material according to the second aspect of the present invention, the thermoplastic resin (b-2) constituting the reinforced sheets (B) and the thermoplastic resin (a-1) constituting the self-reinforced sheet (A) are not particularly limited. However, each thermoplastic resin may preferably melt or soften at the molding temperature when the sheet material are integrated. When such resins are selected, the randomly-oriented mat (b-1) will be impregnated with the thermoplastic resins (b-2) and (a-1) and the intervening randomly-oriented mat (b-1) will establish firm mechanical bonding between the self-reinforced sheet (A) and the reinforced sheets (B). In the sheet material according to the second aspect of the present invention, it is preferable that all of the thermoplastic resin (b-2) constituting the reinforced sheets (B) and the thermoplastic resin (a-1) and the fiber or tape (a-2) constituting the self-reinforced sheet (A) are a polyolefin resin.

The thermoplastic resins (b-2) as mentioned above as exemplary thermoplastic resins used in the self-reinforced sheet (B) may have an elastomer or a rubber component added thereto to the extent not adversely affecting the merits of the present invention.

Exemplary methods used in producing the randomly-oriented mat (b-1) of the discontinuous carbon fibers used in the reinforced sheets (B-1) and (B-2) according to the second aspect of the present invention are the method described for the first aspect of the present invention. The randomly-oriented mat (b-1) of the discontinuous carbon fibers used in the second aspect of the present invention is preferably produced by wet process in view of the good filament dispersion.

In producing the reinforced sheets (B-1), for example, a randomly-oriented mat (b-1) having the discontinuous carbon fibers dispersed in single fiber state may be preliminarily prepared, and a film of the thermoplastic resin (b-2) may be laminated on the randomly-oriented mat (b-1) in thickness direction. The laminate structure may be adequately changed depending on the desired balance between the impact resistance properties and the rigidity and intended application to the extent not adversely affecting the merits of the present invention. For example, the thermoplastic resin films (b-2) may be disposed on the randomly-oriented mat (b-1) of the discontinuous carbon fibers, or on the contrary, the randomly-oriented mat (b-1) may be laminated by the film of the thermoplastic resin (b-2). Alternatively, the films of the thermoplastic resin (b-2) may be disposed on opposite surface in the thickness direction of the randomly-oriented mat (b-1).

In the case of the reinforced sheets (B-2) of the present invention, the randomly-oriented mat (b-1) of the discontinuous carbon fibers is impregnated with a film of the thermoplastic resin (b-2). The method used for the impregnation include a method using the randomly-oriented mat (b-1) wherein a pressure is applied while heating the film of the thermoplastic resin (b-2) to a temperature equal to or higher than its melting or softening temperature to thereby impregnate the molten thermoplastic resin (b-2) into the randomly-oriented mat (b-1) to obtain the sheet-shaped reinforced sheets (B-2) . Exemplary methods include a method wherein a randomly-oriented mat (b-1) having a film of thermoplastic resin (b-2) disposed thereon on one side of the thickness direction is heated to a temperature at which the thermoplastic resin (b-2) can be melted, and a pressure is simultaneously applied for impregnation of the resin, and a method wherein the randomly-oriented mat (b-1) is sandwiched between the films of thermoplastic resin (b-2) and a pressure is applied at a temperature at which the thermoplastic resin (b-2) can be melted.

The volume ratio of the random mat (b-1) of the discontinuous carbon fibers in the reinforced sheets (B-1) and (B-2) is preferably in the range of 10 to 40% by volume in view of improving the balance of rigidity, impact resistance, and shaping processability, and more preferably in the range of 15 to 30% by volume and still more preferably 15 to 25% by volume.

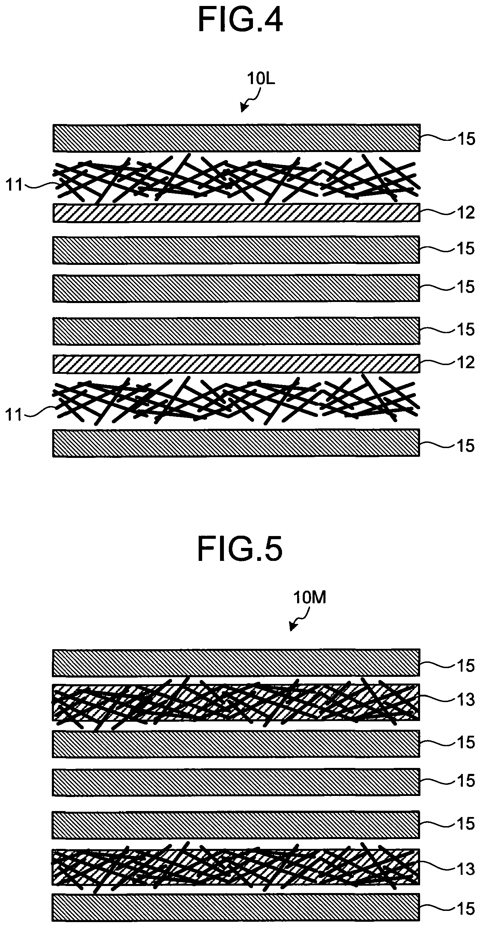

In the second aspect of the present invention, the sheet material is prepared by disposing the self-reinforced sheet (A) on the reinforced sheets (B-1) and (B-2) for integration. FIG. 4 is a schematic view showing an exemplary laminate structure which constitutes the sheet material according to the second aspect of the present invention comprising the reinforced sheets (B-1) comprising the randomly-oriented mat of the discontinuous carbon fibers and the film of the thermoplastic resin and the self-reinforced sheet (A). FIG. 5 is a schematic view showing an exemplary laminate structure which constitutes the sheet material according to the second aspect of the present invention comprising the reinforced sheets (B-2) comprising the randomly-oriented mat of the discontinuous carbon fibers impregnated with the thermoplastic resin film and the self-reinforced sheet (A).

In the sheet material according to the second aspect of the present invention, it is only necessary that the randomly-oriented mat (b-1) of the discontinuous carbon fibers (numeral 11 in FIG. 4) is included as a laminate unit as shown in FIG. 4. However, the randomly-oriented mat (b-1) of the discontinuous carbon fibers is preferably arranged near the film of thermoplastic resin (b-2) (numeral 12 in FIG. 4). The arrangement of the self-reinforced sheet (A) (numeral 15 in FIG. 4), the randomly-oriented mat (b-1) (numeral 11 in FIG. 4), and the film of thermoplastic resin (b-2) (numeral 12 in FIG. 4) in the laminate is not limited to the laminate structure of preform 10L shown in FIG. 4 and any arrangement can be selected depending on the desired balance of the properties.

In the sheet material according to the second aspect of the present invention, it is only necessary that the reinforced sheets (B-2) (numeral 13 in FIG. 5) comprising the randomly-oriented mat (b-1) of the discontinuous carbon fibers having the film of the thermoplastic resin (b-2) impregnated therein is included as a laminate unit as shown in FIG. 5, and the arrangement of the self-reinforced sheet (A) (numeral 15 in FIG. 5) and the reinforced sheets (B-2) (numeral 13 in FIG. 5) in the laminate is not limited to the laminate structure of preform 10M shown in FIG. 5 and any arrangement can be selected depending on the desired balance of the properties.

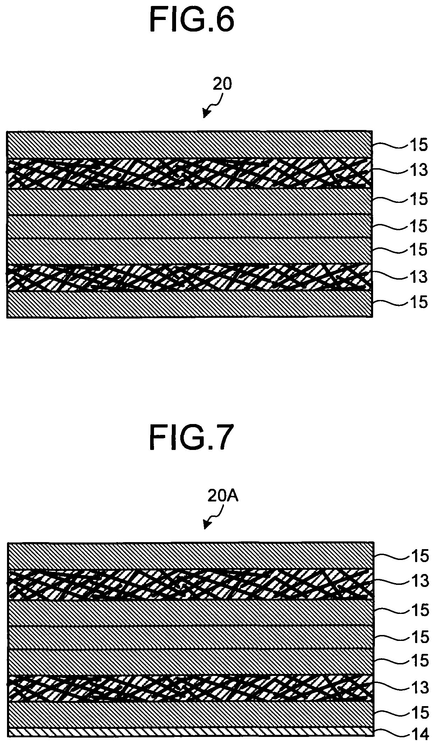

A sheet material 20 according to the second aspect of the present invention can be obtained by integrating the reinforced sheet (B-1) or (B-2) and the self-reinforced sheet (A) having a laminate structure shown in FIG. 4 or 5. FIG. 6 is a schematic view showing the laminate structure of the sheet material produced by integrating the reinforced sheet (B-1) or (B-2) and the self-reinforced sheet (A) having the laminate structure of FIG. 4 or 5. As shown in FIG. 6, the sheet material 20 according to the second aspect of the present invention is a laminate of a plurality of each of the reinforced sheets 13 comprising the randomly-oriented mat of the discontinuous carbon fibers and the film of the thermoplastic resin and the self-reinforced sheet 15 comprising the thermoplastic resin and the fiber or tape, and the laminate has the self-reinforced sheets 15 disposed on opposite surface of the sheet material as the outermost layers, the reinforced sheets 13 inside the outermost self-reinforced sheets 15, and 3 self-reinforced sheets 15 in the center. While the sheet material 20 shown in FIG. 6 is a laminate of 7 layers, the layer number is not limited to such embodiment and the number of layers is preferably up to 30 and more preferably up to 20 in view of the handling convenience in the lamination step. The reinforced sheets 13 and the self-reinforced sheets 15 may be alternately disposed, and the laminate structure may be adequately changed depending on the desired balance between the impact properties and the rigidity and intended application to the extent not adversely affecting the merits of the present invention. For example, when the impact resistance is to be realized by one outermost layer and the strength is to be realized by the other outermost layer, the sheet material may be the one having a laminate structure which is asymmetrical in the thickness direction with the self-reinforced sheet 15 having the excellent impact resistance disposed on the side of one outermost layer and the reinforced sheets 13 having the excellent mechanical properties disposed on the side of the other outermost layer. In view of the warping of the resulting molded article, the preferable method is the one wherein the layers are symmetrically disposed in the thickness direction.

The sheet material according to the second aspect of the present invention can be prepared into the sheet material by laminating the self-reinforced sheet (A) with the reinforced sheets (B-1) and (B-2) for integration. The process of laminating the thermoplastic resin (a-1), the fiber or tape (a-2), the randomly-oriented mat (b-1), and the thermoplastic resin (b-2) and impregnating the thermoplastic resins (a-1) and (b-2) in the fiber or tape (a-2) and the randomly-oriented mat (b-1) and the process of integrating into the sheet material may be simultaneously carried out. When the thermoplastic resin of the same type is used for the matrix resin of the self-reinforced sheet (A) and the reinforced sheets (B), (namely, when the thermoplastic resin (a-1) and (b-2) are the same), the matrix resin may be preliminarily impregnated in either one of the fiber or tape (a-2) and the randomly-oriented mat (b-1) for integration.

Examples of the preferable installation used for realizing the laminated composite sheet material include compression pressing machine, double belt press, and calendar roll. The batchwise production is the former case, and the productivity can be improved by using an intermittent pressing system wherein two machines, namely, a heater machine and a cooling machine which are aligned in parallel. The continuous production is the latter case, and in such case, roll to roll processing can be readily conducted thereby realizing an improved continuous productivity.

The discontinuous carbon fibers constituting the randomly-oriented mat (b-1) used in the second aspect of the present invention may preferably have a mean fiber length Lw (mean fiber length Lw is mass mean fiber length Lw) of up to 50 mm as in the case of the first aspect of the present invention. When the mean fiber length Lw is in such range, adjustment of the two-dimensional contact angle of the discontinuous carbon fibers in the randomly-oriented mat (b-1) as described below will be easier.

The mean fiber length Lw of the discontinuous carbon fibers in the sheet material according to the second aspect of the present invention may be measured by the same method as the first aspect of the present invention.

In the sheet material according to the second aspect of the present invention, the discontinuous carbon fibers in the randomly-oriented mat (b-1) is dispersed at a dispersion ratio of at least 90%. When the dispersion ratio of the discontinuous carbon fibers is at least 90%, the preform will exhibit excellent mechanical properties and high impact resistance since most carbon fibers will be present in the state of the single fiber and the carbon fibers having high aspect ratio will be uniformly distributed. The more preferable dispersion state of the discontinuous carbon fiber is the dispersion ratio of at least 96%.

In the second aspect of the present invention, dispersion ratio of the discontinuous carbon fibers is the percentage in number of the carbon fiber single fibers wherein the two-dimensional contact angle is at least 1° when the two-dimensional contact angle formed between the single fiber of the discontinuous carbon fiber and another single fiber of the discontinuous carbon fiber that is in contact with the carbon fiber is measured from the side of the acute angle (0° to 90°). Such dispersion ratio of the discontinuous carbon fibers is represented by the following equation:

$$P = n/N \times 100 \ (unit: \%)$$

P: fiber dispersion ratio
n: total number of the discontinuous carbon fibers (single fibers) having a contact angle of at least 1°
N: total number of the discontinuous carbon fibers (single fibers) whose contact angle has been measured

The two-dimensional contact angle is as described above in the first aspect of the present invention, and this angle may be measured by the method described in the first aspect of the present invention.

In the sheet material according to the second aspect of the present invention, the discontinuous carbon fibers constituting the randomly-oriented mat (b-1) have the maximum value of relative frequency of the two-dimensional orientation angle of less than 0.25 and the minimum value of relative frequency of the two-dimensional orientation angle of at least 0.090 in view of the consistency of the mechanical properties and the impact resistance properties. The relative frequency of the two-dimensional orientation angle frequency distribution of the discontinuous carbon fibers is an index for the two-dimensional orientation angle distribution of the discontinuous carbon fibers.

In the sheet material according to the second aspect of the present invention, the maximum and the minimum values of the relative frequency of the two-dimensional orientation angle distribution of the discontinuous carbon fibers may be calculated by the procedure described in the first aspect of the present invention.

The sheet material according to the second aspect of the present invention preferably has a thickness of the reinforced sheets (B) of up to 500 $\mu$m since such sheet material will enjoy increased design freedom of the sheet material laminate structure, and improved balance between the mechanical properties and the impact resistance. More preferably, the thickness of the reinforced sheets (B) is up to 300 $\mu$m.

The sheet material according to the second aspect of the present invention may also contain an additive similar to those according to the first aspect of the present invention.

The sheet material according to the second aspect of the present invention is not particularly limited for its laminate structure, and any desired laminate structure may be selected in view of the mechanical properties, impact resistance, shapability, design, and the like. For example, a sheet material having a good surface appearance can be obtained by disposing the self-reinforced sheet (A) as the outermost layer, and a sheet material having a high rigidity as the mechanical properties can be obtained by disposing the reinforced sheet (B) as the outermost layer or a layer near the outermost layer. In view of the good balance between the mechanical properties and the impact resistance, a laminate including two or more self-reinforced sheets (A) and two or more reinforced sheets (B) is preferable.

In the second aspect of the present invention, a sheet material having a good design can be realized by disposing the self-reinforced sheet (A) as the outermost layer, and a sheet material having a high rigidity as the mechanical properties can be obtained by disposing the reinforced sheet (B) as the outermost layer or a layer near the outermost layer.

In the second aspect of the present invention, the films of the thermoplastic resin (b-2) constituting the reinforced sheets (B-1) and (B-2) preferably comprise an adhesive resin (C) in view of the ease of integrating the sheet material according to the second aspect of the present invention with other sheet material. The thermoplastic resin (b-2) constituting the reinforced sheets (B) may also be the one wherein the adhesiveness has been realized by partial incorporation of the adhesive resin (C).

The adhesive resin (C) may also be in the form of a sheet. When the adhesive resin (C) is in the form of a sheet, it can be disposed on the outermost layer in the thickness direction of the integrated sheet material comprising the reinforced sheet (B-1) or (B-2) having the self-reinforced sheet (A) laminated thereon. The sheet comprising the adhesive resin (C) can be integrated by applying heat and pressure after disposing the sheet on the surface of the sheet material.

FIG. 7 is a schematic view of the sheet material comprising the sheet material according to the second aspect of the present invention having a film of the adhesive resin (C) adhered thereto. As shown in FIG. 7, a sheet 14 comprising the adhesive resin (C) is disposed on the outermost surface of the sheet material 20A. By disposing the sheet 14 comprising the adhesive resin (C) on the outermost layer, the sheet material 20A can be adhered to other sheet material by the intervening sheet 14. The adhesive resin (C) preferably has a melting point or softening point not exceeding the melting point or softening point of the thermoplastic resin (b-2) constituting the reinforced sheets (B-1) and (B-2) in view of the ease of the integration with the sheet material and dispersibility of the adhesive resin (C) in the kneading with the thermoplastic resin (b-2) constituting the reinforced sheets (B).

A preferable embodiment of the sheet material according to the second aspect of the present invention is a sheet material having a sheet comprising an adhesive resin (C) integrally adhered on its surface in the form of a coating film in view of the adhesion to other sheet material.

Exemplary thermoplastic resins used for the adhesive resin (C) include resin compositions such as polyamide resin, polyester resin, polyolefin resin, polyarylene sulfide resin, copolymers thereof, modification products thereof, and resins produced by blending two or more of these resins, and the preferred are polyolefin resin and polyamide resin for their versatility. The polyolefin resin preferably contains a reactive functional group in view of the adhesiveness, and it is preferably a polyolefin resin modified with at least one member selected from carboxyl group, acid anhydride group, hydroxy group, epoxy group, amino group, and carbodiimide group. The particularly preferred are polyolefin resins modified with an acid anhydride group. The polyamide resin is preferably a copolymer resin in view of the melting temperature and adhesiveness with the thermoplastic resin of the matrix resin. Of such copolymer, the preferred are three component copolymerization polyamide resins. Exemplary such polyamide resins include polyamide 12, polyamide 610, and polyamide 6/66/610, and the most preferred is the three component copolymer 6/66/610 in view of the adhesion to the matrix resin.

In the second aspect of the present invention, the composite sheet material can be prepared by integrating a first sheet material which is a sheet material wherein the thermoplastic resin (b-2) is the adhesive resin (C) or a sheet material having the sheet comprising the adhesive resin (C) adhered to the surface thereof with a second sheet material which is another sheet material. The composite sheet material can be a preferable composite sheet material that has inherited the rigidity and impact properties of the first sheet material when the sheet material using the adhesive resin (C) is used for the first material. Integration with a second sheet material having high shapability is preferable for realizing the request for a more complicated shape. Preferable second sheet material is the sheet material having a thermoplastic resin as its matrix resin in view of the adhesion with the first sheet material.

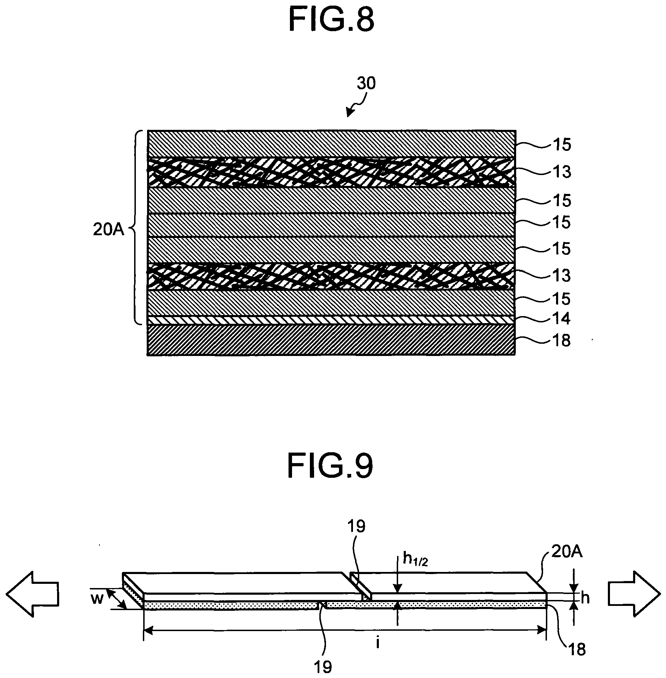

FIG. 8 is a schematic view showing an embodiment of the composite sheet material which is a variation of the second aspect of the present invention.

As shown in FIG. 8, a composite sheet material 30 comprises the sheet material 20A (the first sheet material) having the sheet 14 comprising the adhesive resin (C) as the outermost layer and another sheet material 18 which is the second sheet material adhered by the sheet 14 comprising the adhesive resin (C). As shown in FIG. 8, in view of the adhesion, the sheet 14 comprising the adhesive resin (C) is preferably disposed as one outermost surface of the sheet material 20A which is the side to which the sheet material 18 is adhered.

The methods used for integrating the first sheet material with the second sheet material include those generally used in obtaining a composite sheet material. Exemplary such methods include press molding having a mechanism of applying heat and pressure such as hot press molding, stamping molding, and heat and cool molding. Of these press molding methods, the preferred are stamping molding and heat and cool molding in view of improving the productivity by shortening the molding cycle.

The means used in bonding the first sheet material or the second sheet material is not particularly limited. For example, the bonding may be accomplished by a method wherein the first sheet material and the second sheet material are separately and preliminarily formed and thereafter bonded, or by a method wherein the first sheet material is preliminarily formed and both sheets are bonded simultaneously with the molding of the second sheet material.

In producing the composite sheet material, the sheet materials may be preliminarily laminated to form a laminate. Such laminate unit is not particularly limited as long as the laminate unit includes at least one first sheet material, and other laminate units are not particularly limited. However, when other laminate units as described above are incorporated, the composite sheet material will be imparted with various functions and properties inherent to such laminate units. The laminate unit may include the sheet material according to the second aspect of the present invention, and also, other laminate units.

The sheet material and the composite sheet material of the second aspect of the present invention have good balance between the rigidity and the impact resistance properties, and therefore, they can be used as a component of various members and parts, for example electric and electronic parts, structural parts for automobiles and bicycles, air craft parts, and everyday item. In view of the mechanical properties as described above, the composite sheet material and the molded article of the present invention are preferable for use in automobile interior and exterior materials, electric and electronic housing, and everyday item.

Examples

Next, the present invention is described in further detail by referring to the following Examples, Reference Examples and Comparative Examples.

<Evaluation and measurement methods>

(1) Rigidity test

The sample was evaluated for its flexural modulus according to the standard of ASTM D-790 for use as the rigidity. Test pieces each having a length of 80 ± 1 mm and a width of 25 ± 0.2 mm were cut out of the sheet-shaped material obtained in the Examples, the Reference Examples or the Comparative Examples in 4 directions of 0°, +45°, -45°, and 90° when an arbitrary direction is assumed 0° direction to thereby prepare the flexural test pieces. The number of measurements for each direction was 5 (n = 5), and average of all measurements (n = 20) was used for the flexural modulus.

The testing machine used was "Instron" (registered trademark) universal testing machines 4201 (manufactured by Instron), and the flexural strength was measured by adjusting the support distance to 51.2 mm using a 3-point bending test 3 (indenter diameter 10 mm, support diameter 10 mm), and adjusting the crosshead speed to 1.37 mm/min. The test was conducted under the conditions including the test piece moisture content of up to 0.1% by weight, atmospheric temperature 23°C, and the humidity of 50% by weight.

The coefficient of variation ($CV_b$) of the flexural modulus was determined by using the flexural modulus ($E_b$) and its standard deviation ($s_b$) by the following equation for use as an index of the consistency of the sheet material.

$$CV_b = s_b/\sigma_b \times 100 \quad (unit: \%)$$

(2) Impact test

Notched Izod impact strength was evaluated according to the standard of ASTM D-256. The test piece for the Izod impact strength was cut out from the sheet-shaped material obtained in the Examples, the Reference Examples or the Comparative Examples so that the length was 62 ± 1 mm, width was 12.7 ± 0.15 mm, notch angle was 22.5° ± 0.5°, 0.25 ± 0.05R and in the 4 directions of 0°, +45°, -45°, and 90° when an arbitrary direction was the direction of 0°. The measurement was conducted 5 times for each direction (n = 5), and average of all measurements (n = 20) was used for the Izod impact strength (notched) . The test was conducted under the conditions of moisture content of the test piece of up to 0.1% by weight, atmospheric temperature of 23°C, and humidity of 50% by weight.

Coefficient of variation ($CV_i$) of the notched Izod strength was determined by using the notched Izod impact strength (E) and its standard deviation ($s_e$) for use as an index of the consistency of the sheet material. The coefficient of variation ($CV_i$) of the Izod strength was calculated by the following equation:

$$CV_i = s_e/E \times 100 \quad (unit: \%)$$

(3) Measurement of mass mean fiber length (Lw) of the discontinuous carbon fiber constituting the reinforced sheets (B)

A piece was cut out of the reinforced sheets (B), and the piece was heated at a temperature of 500°C for 30 minutes to remove the thermoplastic resin (b-2) component by firing to separate the discontinuous carbon fiber. 400 separated carbon fibers were randomly selected from the thus separated discontinuous carbon fibers, and their length was measured under an optical microscope to the unit of 1 μm for use as the fiber length. The mass mean fiber length (Lw) was then determined by the following equation:

$$Lw = \Sigma(Li \times Wi) \quad (unit: mm)$$

- Li: fiber length measured (i = 1, 2, 3, ... 400) (unit: mm)
- Wi: mass fraction of the carbon fibers having a fiber length Li (i=1, 2, 3, ... 400) (unit: % by weight)

(4) Dispersion ratio of the randomly-dispersed discontinuous carbon fibers

A test piece was cut out from the sheet-shaped material obtained in the Examples, the Reference Examples or the Comparative Examples, and the thus cut out test piece was embedded in epoxy resin. The surface was polished to a depth of 100 $\mu$m in the thickness direction of the sheet-shaped material to prepare the test piece for use in the observation.

The test piece for observation was observed by an optical microscope, and 100 single fibers of the discontinuous carbon fibers were randomly selected. The two-dimensional contact angle was then measured for the single fiber of the discontinuous carbon fiber with all of the single fibers in contact with the discontinuous carbon fiber. The two-dimensional contact angle was measured for the acute angle of 0° to 90°, and the percentage of the discontinuous carbon fiber having the two-dimensional contact angle of at least 1° was calculated from the total number of carbon fiber single fibers whose two-dimensional contact angle had been measured.

$$P = n/N \times 100 \text{ (unit: \%)}$$

P: fiber dispersion ratio
n: total number of the discontinuous carbon fibers (single fibers) having a contact angle of at least 1°
N: total number of the discontinuous carbon fibers (single fibers) whose contact angle have been measured
n: number of the carbon fiber single fibers having a contact angle of at least 1°
N: number of the carbon fiber single fibers whose contact angle has been measured

(5) Distribution of two-dimensional orientation angle of the discontinuous carbon fibers in the randomly-oriented mat (b-1)

A test piece was cut out from the sheet material obtained in the Examples, the Reference Examples or the Comparative Examples, and the thus cut out test piece was embedded in epoxy resin. The surface was polished to a depth of 100 $\mu$m in the thickness direction of the sheet material to prepare the test piece for use in the observation.

The test piece for observation was observed by an optical microscope, and 400 discontinuous carbon fibers were randomly selected. Next, one standard straight line was arbitrarily set for use as the standard of the angle, and the angles of two-dimensional orientation direction (hereinafter abbreviated as orientation angle $\alpha_i$) of all selected discontinuous carbon fibers in relation to the standard straight line were measured. The orientation angle $\alpha_i$ measured was the angle in counter clockwise from the standard straight line in the range of at least 0° and less than 180°. The relative frequency of this orientation angle $\alpha_i$ at the increment of 30° was calculated by the following equation:

$$\text{Maximum value of the relative frequency} = N_{MAX}/400$$

$$\text{Minimum value of the relative frequency} = N_{MIN}/400$$

$\alpha_i$: two-dimensional orientation angle measured (i = 1, 2, ..., 400)

- N30: number of carbon fibers having the orientation angle $\alpha_i$ of at least 0° and less than 30°
- N60: number of carbon fibers having the orientation angle $\alpha_i$ of at least 30° and less than 60°
- N90: number of carbon fibers having the orientation angle $\alpha_i$ of at least 60° and less than 90°
- N120: number of carbon fibers having the orientation angle $\alpha_i$ of at least 90° and less than 120°
- N150: number of carbon fibers having the orientation angle $\alpha_i$ of at least 120° and less than 150°
- N180: number of carbon fibers having the orientation angle $\alpha_i$ of at least 150° and less than 180°.
- $N_{MAX}$: maximum value of the N30 to N180
- $N_{MIN}$: minimum value of the N30 to N180

(6) Peak melting temperature of the thermoplastic resin (a-2) and the fiber or tape (a-1)

The peak melting temperature of the thermoplastic resin (a-2) and the fiber or tape (a-1) constituting the self-reinforced sheet (A) was evaluated as described below. First, the self-reinforced sheet (A) was separated into the fiber or tape (a-1) and the thermoplastic resin (a-2) . For the separation, a razor was used to peel the fiber or tape layer (a-2) from the self-reinforced sheet (A). Peak value of the melting temperature was then measured according to "Testing methods for transition temperatures of plastics" defined in JIS K7121 (1987). More specifically, the sample was dried in a vacuum dryer controlled to an interior temperature of 50°C for at least 24 hours for adjustment of the sample, and the sample was then placed in a differential scanning calorimeter (DSC 200F3 Maia manufactured by NETZSCH) obtain the melting temperature according to the standard as described above. The peak top was used for the peak melting temperature.

(7) Evaluation of flexural modulus

The sheet material was evaluated for its flexural modulus according to the standard of ASTM D-790.
Test pieces each having a length of 80 $\pm$ 1 mm and a width of 25 $\pm$ 0.2 mm were cut out of the sheet material obtained in the Examples, the Reference Examples or the Comparative Examples in 4 directions of 0°, +45°, -45°, and 90° when an arbitrary direction was assumed 0° direction to thereby prepare the flexural test pieces. The number of measurements for each direction was 5 (n = 5), and average of all measurements (n = 20) was used for the flexural modulus.
The testing machine used was "Instron" (registered trademark) universal testing machines 4201 (manufactured by Instron), and the flexural modulus was measured by adjusting the support distance to 16 times the test piece thickness using a 3-point bending test jig (indenter diameter, 10 mm; support diameter, 10 mm) . The test was conducted under the conditions including the test piece moisture content of up to 0.1% by weight, atmospheric temperature 23°C, and the humidity of 50% by weight.

(8) Determination of the coefficient of variation of flexural modulus

The coefficient of variation ($CV_b$) of the flexural strength was determined by using the flexural strength ($\alpha_b$) and its standard deviation ($s_b$) by the following equation:

$$CV_b = s_b/\sigma_b \times 100 \text{ (unit: \%)}$$

(9) Tensile shear strength τ2 at the joint of the composite sheet material

Tensile shear strength τ2 (MPa) at the joint of the composite sheet material was evaluated according to "Adhesives-Determination of tensile lap-shear strength of rigid-to-rigid bonded assemblies" defined in JIS K6850 (1999) . The test piece used in this test was cut out from the planar section of the composite sheet material (adhesion interface in FIG. 8 is the adhesion interface of the sheet material 20A and another sheet material 18 adhered by the sheet 14 comprising an adhesive resin (C) ) obtained in the Examples, the Reference Examples or the Comparative Examples. FIG. 9 is a perspective view of the tensile shear test piece. The test piece has notches 19 having a width w formed in the opposite surfaces at different positions along the length 1, the notches each extending to the half depth $h_{1/2}$ of the thickness h, and the joint between the sheet material 20A and the second sheet material 18 is formed at the position of half depth $h_{1/2}$. 5 such test pieces were prepared, and the tensile test was conducted by using a universal testing machine (universal testing machines 4201 manufactured by Instron) . Average was calculated from all data (n = 5) obtained in the test, and this value was used for the tensile shear strength τ2 (MPa) at the joint of the composite sheet material.

<Materials used>

[Carbon fiber 1]

A continuous carbon fiber having a total filament number of 12000 was prepared by spinning a polymer containing polyacrylonitrile as its main component and firing the fiber. The continuous carbon fiber was subjected to electrolytic surface treatment and the treated fiber was dried in the air heated to 120°C to obtain carbon fiber 1. This carbon fiber 1 had the following properties.

Density: 1.80 $g/cm^3$
Single fiber diameter: 7 $\mu$m
Tensile strength: 4.9 GPa
Tensile modulus: 230 GPa

[Randomly-oriented mat 1 of discontinuous carbon fibers (CFM-1)]

The carbon fiber 1 was cut by a cartridge cutter to a length of 6 mm to produce chopped fibers. 40 liters of a dispersion medium at a concentration of 0.1% by weight comprising water and a surfactant (polyoxyethylene lauryl ether (Product name) manufactured by NACALAI TESQUE, INC.) was prepared, and this dispersion medium was charged in a sheet forming machine. The sheet forming machine was constituted from an upper sheet forming tank (volume, 30 liters) equipped with an agitator having rotary blades, a lower water (volume 10 liters), and a porous support between the sheet forming tank and the water tank. First, the dispersion medium was agitated with the agitator until fine air bubbles were formed. Next, the chopped fibers of the amount adjusted to realize the desired unit weight were added to the dispersion medium having the fine air bubbles therein to prepare a slurry having the carbon fiber dispersed therein. The slurry was then sucked from the water tank to remove the water from the intervening porous support to obtain the randomly-oriented mat of the discontinuous carbon fibers. The randomly-oriented mat of the discontinuous carbon fibers was dried with a hot air dryer under the condition of 150°C for 2 hours to thereby obtain the randomly-oriented mat 1 of discontinuous carbon fibers having a unit weight of 50 $g/m^2$ wherein the carbon fibers are randomly oriented.

[Randomly-oriented mat 2 of discontinuous carbon fibers (CFM-2)]

The procedure of preparing the randomly-oriented mat 1 was repeated except that the chopped fibers which had been cut to a length of 25 mm with the cartridge cutter were used to obtain the randomly-oriented mat 2 of the discontinuous carbon fibers having a unit weight of 50 $g/m^2$.

[Randomly-oriented mat 3 of discontinuous carbon fibers (CFM-3)]

The procedure of preparing the randomly-oriented mat 1 was repeated except that the chopped fibers which had been cut to a length of 60 mm with the cartridge cutter were used to obtain the randomly-oriented mat 3 of the discontinuous carbon fibers having a unit weight of 50 $g/m^2$.

[Randomly-oriented mat 4 of discontinuous carbon fibers (CFM-4)]

The carbon fiber 1 was cut to a length of 25 mm to produce chopped fibers. The chopped fibers were injected in an opener to obtain fluffy carbon fiber assembly wherein the carbon fiber bundle of its original width was substantially absent. This carbon fiber assembly was carded in a carding machine having a cylinder roll with a diameter of 600 mm (wherein the cylinder roll was rotated at 320 rpm and the doffer speed was 13 m/minute) to intentionally direct the fibers in the take up direction of the carding machine and obtain the randomly-oriented mat 4 of the discontinuous carbon fibers having a unit weight of 50 $g/m^2$.

[Randomly-oriented mat 5 of discontinuous carbon fibers (CFM-5)]

The procedure of preparing the randomly-oriented mat 1 was repeated except that the carbon fiber 1 was cut to a length of 6 mm with a cartridge cutter to obtain the chopped fibers, the dispersion medium did not contain the surfactant, and the agitation with the agitator having the rotary blades was less vigorously conducted to intentionally reduce the fiber dispersion ratio, to thereby obtain the randomly-oriented mat 5 of the discontinuous carbon fibers having a unit weight of 50 $g/m^2$.

[Randomly-oriented mat 6 of discontinuous carbon fibers (CFM-6)]

The procedure of preparing the randomly-oriented mat 1 was repeated by using the chopped fibers which had been cut to a length of 6 mm with a cartridge cutter to obtain the randomly-oriented mat 6 of the discontinuous carbon fibers having a unit weight of 35 $g/m^2$.

[Randomly-oriented mat 7 of discontinuous carbon fibers (CFM-7)]

The procedure of preparing the randomly-oriented mat 1 was repeated by using the chopped fibers which had been cut to a length of 25 mm with a cartridge cutter to obtain the randomly-oriented mat 7 of the discontinuous carbon fibers having a unit weight of 35 $g/m^2$.

[Randomly-oriented mat 8 of discontinuous carbon fibers (CFM-8)]

The procedure of preparing the randomly-oriented mat 1 was repeated by using the chopped fibers which had been cut to a length of 60 mm with a cartridge cutter to obtain the randomly-oriented mat 8 of discontinuous carbon fibers having a unit weight of 35 $g/m^2$.

[Randomly-oriented mat 9 of discontinuous carbon fibers (CFM-9)]

The procedure of preparing the randomly-oriented mat 1 was repeated except that the carbon fiber 1 was cut to a length of 6 mm with a cartridge cutter to obtain the chopped fibers, the dispersion medium did not contain the surfactant, and the agitation with the agitator having the rotary blades was less vigorously conducted to intentionally reduce the fiber dispersion ratio, to thereby obtain the randomly-oriented mat 9 of the discontinuous carbon fibers having a unit weight of 35 $g/m^2$.

[Thermoplastic resin film 1 (TPF-1)]

A thermoplastic resin film 1 having a unit weight of 100 $g/m^2$ was prepared by using an unmodified polypropylene resin ("Prime Polypro" (registered trademark) J707G manufactured by Prime Polymer Co.,Ltd.).

[Thermoplastic resin film 2 (TPF-2)]

A thermoplastic resin film 2 having a unit weight of 124 $g/m^2$ comprising a polyamide 6 resin ("AMILAN" (registered trademark) CM1021T manufactured by Toray Industries, Inc.) was prepared.

[Thermoplastic resin film 3 (TPF-3)]

A thermoplastic resin film 3 having a unit weight of 100 $g/m^2$ was prepared by using a master batch comprising 90% by weight of an unmodified polypropylene resin ("Prime Polypro" (registered trademark) J707G manufactured by Prime Polymer Co.,Ltd.) and 10% by weight of an acid-modified polypropylene resin ("Admer" (registered trademark) QB510 manufactured by Mitsui Chemicals, Incorporated).

[Thermoplastic resin film 4 (TPF-4)]

A thermoplastic resin film 4 having a unit weight of 124 $g/m^2$ was prepared by using a master batch comprising 90% by weight of a polyamide 6 resin ("AMILAN" (registered trademark) CM1021T manufactured by Toray Industries, Inc.) and 10% by weight of a three component copolymer polyamide resin comprising polyamide 6/66/610 ("AMILAN" (registered trademark) CM4000 manufactured by Toray Industries, Inc.).

[Thermoplastic resin film 5 (TPF-5)]

A thermoplastic resin film 5 having a unit weight of 124 $g/m^2$ was prepared by using a master batch comprising 97% by weight of an unmodified polypropylene resin ("Prime Polypro" (registered trademark) J707G manufactured by Prime Polymer Co.,Ltd.) and 3% by weight of an acid-modified polypropylene resin ("Admer" (registered trademark) QB510 manufactured by Mitsui Chemicals, Incorporated).

[Thermoplastic resin film 6 (TPF-6)]

A thermoplastic resin film 6 having a unit weight of 70 $g/m^2$ was prepared by using an unmodified polypropylene resin ("Prime Polypro" (registered trademark) J707G manufactured by Prime Polymer Co.,Ltd.).

[Thermoplastic resin film 7 (TPF-7)]

A thermoplastic resin film 7 having a unit weight of 90 $g/m^2$ comprising a polyamide 6 resin ("AMILAN" (registered trademark) CM1021T manufactured by Toray Industries, Inc.) was prepared.

[Discontinuous carbon fiber-reinforced thermoplastic resin sheet 1 (CFRP-1)]

CFM-1 (the randomly-oriented mat (b-1) of the discontinuous carbon fibers) and TPF-1 (the thermoplastic resin (b-2)) were placed one on another in the thickness direction as shown in FIG. 1-(a) so that they are [(TPF-1)/(CFM-1)] to thereby obtain the preform. The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the discontinuous carbon fiber-reinforced thermoplastic resin sheet 1 (CFRP-1) as the reinforced sheets (B-2).

[Discontinuous carbon fiber-reinforced thermoplastic resin sheet 2 (CFRP-2)]

The procedure of CFRP-1 was repeated except for the use of CFM-2 for the randomly-oriented mat (b-1) of the discontinuous carbon fibers. The discontinuous carbon fiber-reinforced thermoplastic resin sheet 2 (CFRP-2) was thereby obtained as the reinforced sheets (B-2).

[Discontinuous carbon fiber-reinforced thermoplastic resin sheet 3 (CFRP-3)]

The procedure of CFRP-1 was repeated except that CFM-1 was used for the randomly-oriented mat (b-1) of the discontinuous carbon fibers and TPF-2 was used for the thermoplastic resin (b-2), and that they were placed in the cavity of a press-forming mold preheated to 250°C. The discontinuous carbon fiber-reinforced thermoplastic resin sheet 3 (CFRP-3) was thereby obtained as the reinforced sheet (B-2).

[Discontinuous carbon fiber-reinforced thermoplastic resin sheet 4 (CFRP-4)]

The procedure of CFRP-3 was repeated except for the use of CFM-2 for the randomly-oriented mat (b-1) of the discontinuous carbon fibers. The discontinuous carbon fiber-reinforced thermoplastic resin sheet 4 (CFRP-4) was thereby obtained as the reinforced sheets (B-2).

[Discontinuous carbon fiber-reinforced thermoplastic resin sheet 5 (CFRP-5)]

The procedure of CFRP-1 was repeated except for the use of CFM-1 for the randomly-oriented mat (b-1) of the discontinuous carbon fibers and TPF-3 for the thermoplastic resin (b-2). The discontinuous carbon fiber-reinforced thermoplastic resin sheet 5 (CFRP-5) was thereby obtained as the reinforced sheets (B-2).

[Discontinuous carbon fiber-reinforced thermoplastic resin sheet 6 (CFRP-6)]

The procedure of CFRP-3 was repeated except for the use of CFM-1 for the randomly-oriented mat (b-1) of the discontinuous carbon fibers. The discontinuous carbon fiber-reinforced thermoplastic resin sheet 6 (CFRP-6) was thereby obtained as the reinforced sheets (B-2).

[Discontinuous carbon fiber-reinforced thermoplastic resin sheet 7 (CFRP-7)]

The procedure of CFRP-1 was repeated except for the use of CFM-3 for the randomly-oriented mat (b-1) of the discontinuous carbon fibers and TPF-3 for the thermoplastic resin (b-2). The discontinuous carbon fiber-reinforced thermoplastic resin sheet 7 (CFRP-7) was thereby obtained as the reinforced sheets (B-2).

[Discontinuous carbon fiber-reinforced thermoplastic resin sheet 8 (CFRP-8)]

The procedure of CFRP-1 was repeated except for the use of CFM-5 for the randomly-oriented mat (b-1) of the discontinuous carbon fibers and TPF-1 for the thermoplastic resin (b-2). The discontinuous carbon fiber-reinforced thermoplastic resin sheet 8 (CFRP-8) was thereby obtained as the reinforced sheets (B-2).

[Discontinuous carbon fiber-reinforced thermoplastic resin sheet 9 (CFRP-9)]

The procedure of CFRP-1 was repeated except for the use of CFM-4 for the randomly-oriented mat (b-1) of the discontinuous carbon fibers and TPF-3 for the thermoplastic resin (b-2). The discontinuous carbon fiber-reinforced thermoplastic resin sheet 9 (CFRP-9) was thereby obtained as the reinforced sheets (B-2).

[Discontinuous carbon fiber-reinforced thermoplastic resin sheet 10 (CFRP-10)]

The procedure of CFRP-1 was repeated except for the use of CFM-5 for the randomly-oriented mat (b-1) of the discontinuous carbon fibers and TPF-3 for the thermoplastic resin (b-2). The discontinuous carbon fiber-reinforced thermoplastic resin sheet 10 (CFRP-10) was thereby obtained as the reinforced sheets (B-2).

[Discontinuous carbon fiber-reinforced thermoplastic resin sheet 11 (CFRP-11)]

The procedure of CFRP-1 was repeated except that CFM-6 was used for the randomly-oriented mat (b-1) of the discontinuous carbon fibers and TPF-6 was used for the thermoplastic resin (b-2), and that the preform was placed in the cavity of the press-forming mold preheated to 220°C with a 0.10 mm spacer for the thickness adjustment, and after closing the mold, a pressure of 5 MPa was applied and the pressure was retained for 300 seconds. The discontinuous carbon fiber-reinforced thermoplastic resin sheet 11 (CFRP-11) was thereby obtained as the reinforced sheets (B-2).

[Discontinuous carbon fiber-reinforced thermoplastic resin sheet 12 (CFRP-12)]

The procedure of CFRP-11 was repeated except for the use of CFM-7 for the randomly-oriented mat (b-1) of the discontinuous carbon fibers and TPF-6 for the thermoplastic resin (b-2). The discontinuous carbon fiber-reinforced thermoplastic resin sheet 12 (CFRP-12) was thereby obtained as the reinforced sheets (B-2).

[Discontinuous carbon fiber-reinforced thermoplastic resin sheet 13 (CFRP-13)]

The procedure of CFRP-3 was repeated except that CFM-6 was used for the randomly-oriented mat (b-1) of the discontinuous carbon fibers and TPF-7 was used for the thermoplastic resin (b-2), and that the preform was placed in the cavity of the press-forming mold preheated to 250°C with a 0.10 mm spacer for the thickness adjustment, and after closing the mold, a pressure of 5 MPa was applied and the pressure was retained for 300 seconds. The discontinuous carbon fiber-reinforced thermoplastic resin sheet 13 (CFRP-13) was thereby obtained as the reinforced sheets (B-2).

[Discontinuous carbon fiber-reinforced thermoplastic resin sheet 14 (CFRP-14)]

The procedure of CFRP-11 was repeated except for the use of CFM-9 for the randomly-oriented mat (b-1) of the discontinuous carbon fibers and TPF-6 for the thermoplastic resin (b-2). The discontinuous carbon fiber-reinforced thermoplastic resin sheet 14 (CFRP-14) was thereby obtained as the reinforced sheets (B-2).

[Discontinuous carbon fiber-reinforced thermoplastic resin sheet 15 (CFRP-15)]

The procedure of CFRP-11 was repeated except for the use of CFM-8 for the randomly-oriented mat (b-1) of the discontinuous carbon fibers and TPF-6 for the thermoplastic resin (b-2). The discontinuous carbon fiber-reinforced thermoplastic resin sheet 15 (CFRP-15) was thereby obtained as the reinforced sheets (B-2).

[Discontinuous carbon fiber-reinforced thermoplastic resin sheet 16 (CFRP-16)]

The procedure of CFRP-3 was repeated except for the use of CFM-6 for the randomly-oriented mat (b-1) of the discontinuous carbon fibers and TPF-5 for the thermoplastic resin (b-2). The discontinuous carbon fiber-reinforced thermoplastic resin sheet 16 (CFRP-16) was thereby obtained as the reinforced sheets (B-2).

[Discontinuous carbon fiber-reinforced thermoplastic resin sheet 17 (CFRP-17)]

The procedure of CFRP-11 was repeated except for the use of CFM-6 for the randomly-oriented mat (b-1) of the discontinuous carbon fibers and TPF-6 for the thermoplastic resin (b-2). The discontinuous carbon fiber-reinforced thermoplastic resin sheet 17 (CFRP-17) was thereby obtained as the reinforced sheets (B-2).

[Adhesive resin film 1 (MTPF-1)]

The adhesive resin film 1 having a unit weight of 100 $g/m^2$ was prepared by solely using an acid modified polypropylene resin ("Admer" (registered trademark) QB510 manufactured by Mitsui Chemicals, Incorporated).

[Adhesive resin film 2 (MTPF-2)]

The adhesive resin film 2 having a unit weight of 124 $g/m^2$ was prepared by solely using a three component copolymer polyamide resin comprising polyamide 6/66/610 ("AMILAN" (registered trademark) CM4000 manufactured by Toray Industries, Inc.).

[Self-reinforced thermoplastic resin sheet 1 (SRPP-1)]

"Curv" (registered trademark) manufactured by Propex Fabrics GmbH prepared by a polypropylene resin was used.

[Self-reinforced thermoplastic resin sheet 2 (SRPA-1)]

The self-reinforced thermoplastic resin sheet 2 was prepared by using a polyamide 6 resin which is the thermoplastic resin film 3 by referring to P.J. Hine, I.M. Ward, Hot Compaction of Woven Nylon 6, 6 Multifilaments, Journal of Applied Polymer Science, Vol.101, 991-997 (2006).

[PP compound sheet]

Carbon fiber 1 and the master batch used in the preparation of the thermoplastic resin film 1 (TPF-1) were compounded by using a twin screw extruder (TEX-30$\alpha$ manufactured by THE JAPAN STEEL WORKS,LTD.) to prepare pellets for injection molding having a fiber content of 20% by weight. The thus prepared PP compound was injection molded into a flat sheet having a thickness of 1.0 mm. This sheet was used for the second sheet material (PP compound sheet).

[PA compound sheet]

Carbon fiber 1 and the master batch used in the preparation of the thermoplastic resin film 2 (TPF-2) were compounded by using a twin screw extruder (TEX-30$\alpha$ manufactured by THE JAPAN STEEL WORKS,LTD.) to prepare pellets for injection molding having a fiber content of 20% by weight. The thus prepared PA compound was injection molded into a flat sheet having a thickness of 1.0 mm. This sheet was used for the second sheet material (PA compound sheet).

(Example 1)

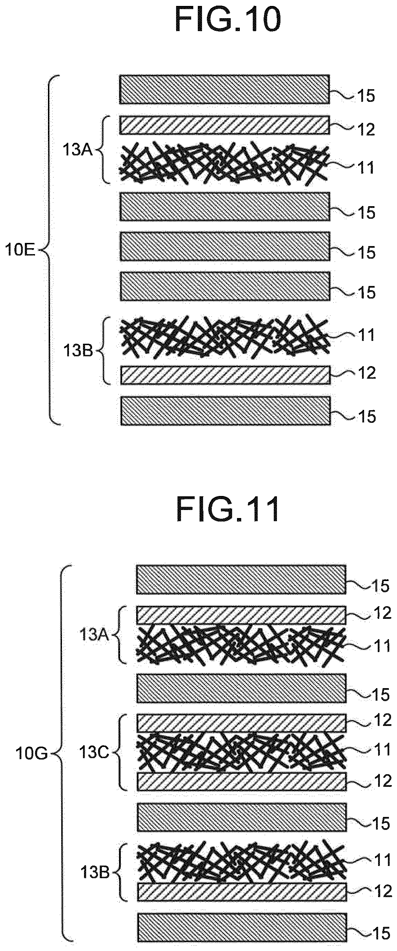

CFM-1 was used for the randomly-oriented mat (b-1) of the discontinuous carbon fibers constituting the reinforced sheets (B), and TPF-1 was used for the thermoplastic resin (b-2) also constituting the reinforced sheets (B). The self-reinforced sheet (A) used was SRPP-1.
Next, these materials were disposed in the order of [(SRPP-1)/(TPF-1)/(CFM-1)/(SRPP-1)/(SRPP-1)/(SRPP-1)/(CFM-1 ) / (TPF-1) / (SRPP-1)] in the thickness direction as shown in FIG. 10 to obtain the preform. FIG. 10 is a schematic view showing the laminate structure of the preform 10E according to Example 1. With regard to the preform 10E, the self-reinforced sheets 15 correspond to SRPP-1, the reinforced sheets 13A corresponds to TPF-1/CFM-1, and the reinforced sheets 13B corresponds to CFM-1/TPF-1 as shown in FIG. 10.
The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 1.

(Example 2)

CFRP-11 was used for the reinforced sheets (B), and SRPP-1 was used for the self-reinforced sheet (A).
Next, these materials were disposed in the order of [(SRPP-1)/(CFRP-11)/(SRPP-1)/(SRPP-1)/(SRPP-1)/(CFRP-11)/(S RPP-1)] in the thickness direction to obtain the preform. The preform was placed in the cavity of a press-forming mold preheated to 220°C, and after closing the mold, a pressure of 5 MPa was applied and the pressure was retained for 300 seconds, and cavity temperature was reduced to 25°C with the pressure retained. The mold was then opened to obtain the sheet-shaped material. The resulting sheet-shaped material had the properties as shown in Table 1.

(Example 3)

The procedure and the method of Example 1 were repeated except for the use of CFM-2 for the randomly-oriented mat (b-2) of the discontinuous carbon fibers constituting the reinforced sheets (B) and use of the thermoplastic resin (b-2) to obtain the sheet-shaped material. The resulting sheet-shaped material had the properties as shown in Table 1.

(Example 4)

The procedure and the method of Example 2 were repeated except for the use of CFRP-12 for the reinforced sheets (B). The resulting sheet-shaped material had the properties as shown in Table 1.

(Example 5)

CFM-1 was used for the randomly-oriented mat (b-1) of the discontinuous carbon fibers constituting the reinforced sheets (B) and TPF-3 was used for the thermoplastic resin (b-2) also constituting the reinforced sheets (B). SRPP-1 was used for the self-reinforced sheet (A).
Next, these materials were disposed in the thickness direction as in the case of the Example 1 to obtain the preform. The sheet-shaped material was obtained by the same method as the Example 1. The resulting sheet-shaped material had the properties as shown in Table 1.

(Example 6)

CFM-1 was used for the randomly-oriented mat (b-1) of the discontinuous carbon fibers constituting the reinforced sheets (B) and TRF-2 was used for the thermoplastic resin (b-2) also constituting the reinforced sheets (B). SRPA-1 was used for the self-reinforced sheet (A).
Next, these materials were disposed in the thickness direction in the order of [(SRPA-1)/(TPF-2)/(CFM-1)/(SRPA-1)/(SRPA-1)/(SRPA-1)/(CFM-1 )/(TPF-2)/(SRPA-1)] to obtain the preform.
The preform was placed in the cavity of a press-forming mold preheated to 250°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 1.

(Example 7)

The procedure and the method of Example 2 were repeated except that SRPA-1 was used for the self-reinforced sheet (A) and CFRP-13 was used for the reinforced sheets (B), and the cavity temperature of the press-forming mold in the preparation of the sheet-shaped material was 250°C. The resulting sheet-shaped material had the properties as shown in Table 1.

(Example 8)

Compression molding was conducted by repeating the procedure of Example 6 except for the use of CFM-2 for the randomly-oriented mat (b-1) of the discontinuous carbon fibers constituting the reinforced sheets (B) to obtain the sheet-shaped material. The resulting sheet-shaped material had the properties as shown in Table 2.

(Example 9)

The procedure of Example 6 was repeated except for the use of CFM-1 for the randomly-oriented mat (b-1) of the discontinuous carbon fibers constituting the reinforced sheets (B), TPF-4 for the thermoplastic resin (b-2) also constituting the reinforced sheets (B), and use of the SRPP-1 for the self-reinforced sheet (A). The resulting sheet-shaped material had the properties as shown in Table 2.

(Example 10)

CFRP-5 was used for the reinforced sheets (B), and SRPP-1 was used for the self-reinforced sheet (A).
Next, these materials were disposed in the order of [(SRPP-1)/(CFRP-5)/(SRPP-1)/(SRPP-1)/(SRPP-1)/(CFRP-5)/(SRP P-1)] in the thickness direction to obtain the preform. The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Example 11)

CFRP-6 was used for the reinforced sheets (B), and SRPA-1 was used for the self-reinforced sheet (A).
Next, these materials were disposed in the order of [(SRPA-1)/(CFRP-6)/(SRPA-1)/(SRPA-1)/(SRPA-1)/(CFRP-6)/(SRP A-1)] in the thickness direction to obtain the preform. The preform was placed in the cavity of a press-forming mold preheated to 250°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Example 12)

CFM-1 was used for the randomly-oriented mat (b-1) of the discontinuous carbon fibers constituting the reinforced sheets (B), and TPF-1 was used for the thermoplastic resin (b-2). SRPP-1 was used for the self-reinforced sheet (A).

Next, these materials were disposed in the order of [(SRPP-1)/(TPF-1)/(CFM-1)/(SRPP-1)/(TPF-1)/(CFM-1)/(TPF-1)/ (SRPP-1) / (CFM-1) / (TPF-1) / (SRPP-1)] in the thickness direction to obtain the preform. FIG. 11 is a schematic view showing the laminate structure of the preform 10G according to Example 12. As shown in FIG. 11, in the preform 10G, the self-reinforced sheet 15 are disposed at opposite surfaces as the outermost layers, and the self-reinforced sheets 15 are disposed on its inner side, and a reinforced sheet 13C comprising the randomly-oriented mat 11 sandwiched between the thermoplastic resins 12 on opposite surfaces is arranged at the center. Example 12 is the preform 10G shown in FIG. 11, and the self-reinforced sheet 15 corresponds to SRPP-1, the reinforced sheets 13A corresponds to TPF-1/CFM-1, the reinforced sheets 13B corresponds to CFM-1/TPF-1, and the reinforced sheets 13C corresponds to TPF-1/CFM-1/TPF-1.

The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Example 13)

CFM-1 was used for the randomly-oriented mat (b-1) of the discontinuous carbon fibers constituting the reinforced sheets (B), and TPF-1 was used for the thermoplastic resin (b-2) also constituting the reinforced sheets (B). SRPP-1 was used for the self-reinforced sheet (A).

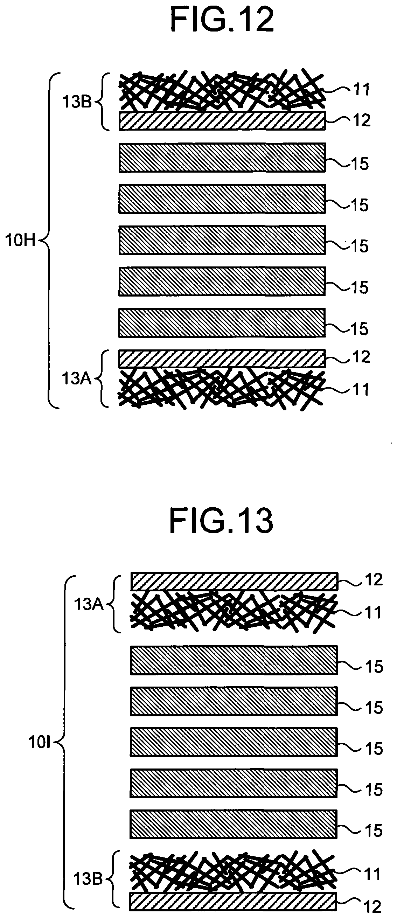

Next, these materials were disposed in the order of [(CFM-1)/(TPF-1)/(SRPP-1)/(SRPP-1)/(SRPP-1)/(SRPP-1)/(SRPP-1) / (TPF-1) / (CFM-1)] in thickness direction as shown in FIG. 12 to obtain the preform. FIG. 12 is a schematic view showing the laminate structure of the preform 10H according to Example 13. As shown in FIG. 12, in the preform 10H, the reinforced sheets 13B and 13A are disposed at opposite surfaces as the outermost layers so that the randomly-oriented mat 11 is on the outside of the thermoplastic resin 12. The inner 5 self-reinforced sheets 15 are SRPP-1, and the reinforced sheet 13A corresponds to TPF-1/CFM-1 and the reinforced sheet 13B corresponds to CFM-1/TPF-1.

The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Example 14)

CFM-1 was used for the randomly-oriented mat (b-1) of the discontinuous carbon fibers constituting the reinforced sheets (B), and TPF-1 was used for the thermoplastic resin (b-2) also constituting the reinforced sheets (B). SRPP-1 was used for the self-reinforced sheet (A).

Next, these materials were disposed in the order of [(TPF-1)/(CFM-1)/(SRPP-1)/(SRPP-1)/(SRPP-1)/(SRPP-1)/(SRPP-1) / (CFM-1) / (TPF-1)] in thickness direction as shown in FIG. 13 to obtain the preform. FIG. 13 is a schematic view showing the laminate structure of the preform 10I according to Example 14. As shown in FIG. 13, in the preform 10I, the reinforced sheets 13A and 13B are disposed at opposite surfaces as the outermost layers so that the thermoplastic resin 12 is on the outside of the randomly-oriented mat 11. The inner 5 self-reinforced sheets 15 are SRPP-1, and the reinforced sheet 13A corresponds to TPF-1/CFM-1 and the reinforced sheet 13B corresponds to CFM-1/TPF-1.

The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Example 15)

CFM-1 was used for the randomly-oriented mat (b-1) of the discontinuous carbon fibers constituting the reinforced sheets (B), and TPF-2 was used for the thermoplastic resin (b-2) also constituting the reinforced sheets (B). SRPP-1 was used for the self-reinforced sheet (A).

Next, these materials were disposed in the order of [(TPF-2)/(CFM-1)/(SRPP-1)/(SRPP-1)/(SRPP-1)/(SRPP-1)/(SRPP-1)/(CFM-1)/(TPF-2)] in thickness direction to obtain the preform.

The preform was placed in the cavity of a press-forming mold preheated to 230°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 2.

(Reference Example 16)

The procedure of Example 1 was repeated except for the use of CFM-5 for the randomly-oriented mat (b-1) of the discontinuous carbon fibers constituting the reinforced sheets (B), TPF-1 for the thermoplastic resin (b-2) also constituting the reinforced sheets (B), and SRPP-1 for the self-reinforced sheet (A) to obtain the sheet-shaped material. The resulting sheet-shaped material had the properties as shown in Table 3.

(Reference Example 17)

The procedure of Example 2 was repeated except for the use of CFRP-14 for the reinforced sheets (B) and SRPP-1 for the self-reinforced sheet (A) to obtain the sheet-shaped material. The resulting sheet-shaped material had the properties as shown in Table 3.

(Reference Example 18)

The procedure of Example 1 was repeated except for the use of CFM-3 for the randomly-oriented mat (b-1) of the discontinuous carbon fibers constituting the reinforced sheets (B), TPF-1 for the thermoplastic resin (b-2), and SRPP-1 for the self-reinforced sheet (A) to obtain the sheet-shaped material. The resulting sheet-shaped material had the properties as shown in Table 3.

(Reference Example 19)

The procedure of Example 1 was repeated except for the use of CFM-4 for the randomly-oriented mat (b-1) of the discontinuous carbon fibers constituting the reinforced sheets (B), TPF-1 for the thermoplastic resin (b-2) also constituting the reinforced sheets (B), and SRPP-1 for the self-reinforced sheet (A) to obtain the sheet-shaped material. The resulting sheet-shaped material had the properties as shown in Table 3.

(Example 20)

CFRP-11 was used for the reinforced sheets (B), and SRPP-1 was used for the self-reinforced sheet (A).
Next, these materials were disposed in the order of [(SRPP-1)/(CFRP-11)/(CFRP-11)/(SRPP-1)/(SRPP-1)/(SRPP-1)/(C FRP-11)/(CFRP-11)/(SRPP-1)] in the thickness direction to obtain the preform. The preform was placed in the cavity of a press-forming mold preheated to 220°C, and after closing the mold, a pressure of 5 MPa was applied and the pressure was retained for 300 seconds, and cavity temperature was reduced to 25°C with the pressure retained. The mold was then opened to obtain the sheet-shaped material. The resulting sheet-shaped material had the properties as shown in Table 3.

(Reference Example 21)

The procedure of Example 2 was repeated except for the use of CFRP-15 for the reinforced sheets (B), and SRPP-1 for the self-reinforced sheet (A) to obtain the sheet-shaped material. The resulting sheet-shaped material had the properties as shown in Table 3.

(Example 22)

CFRP-1 was used for the reinforced sheets (B), SRPP-1 was used for the self-reinforced sheet (A), and MTPF-1 was used for the adhesive resin film.
Next, these materials were disposed in the order of [(SRPP-1)/(CFRP-1)/(SRPP-1)/(SRPP-1)/(SRPP-1)/(CFRP-1)/(SRP P-1) / (MTPF-1)] in the thickness direction to obtain the preform. The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 3.

(Example 23)

The procedure of Example 22 was repeated except for the use of CFRP-2 for the reinforced sheets (B), SRPP-1 for the self-reinforced sheet (A), and MTPF-1 for the adhesive resin film. The resulting sheet-shaped material had the properties as shown in Table 3.

(Example 24)

CFRP-3 was used for the reinforced sheets (B), SRPA-1 was used for the self-reinforced sheet (A), and MTPF-2 was used for the adhesive resin film.
Next, these materials were disposed in the order of [(SRPA-1)/(CFRP-3)/(SRPA-1)/(SRPA-1)/(SRPA-1)/(CFRP-3)/(SRP A-1) / (MTPF-2)] in the thickness direction to obtain the preform. The preform was placed in the cavity of a press-forming mold preheated to 250°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 4.

(Example 25)

The procedure of Example 24 was repeated except for the use of CFRP-4 for reinforced sheets (B), SRPA-1 for the self-reinforced sheet (A), and MTPF-2 for the adhesive resin film to obtain the sheet-shaped material. The resulting sheet-shaped material had the properties as shown in Table 4.

(Example 26)

The procedure of Example 22 was repeated except for the use of CFRP-5 for the reinforced sheets (B), SRPP-1 for the self-reinforced sheet (A), and MTPF-1 for the adhesive resin film to obtain the sheet-shaped material. The resulting sheet-shaped material had the properties as shown in Table 4.

(Example 27)

The procedure of Example 24 was repeated except for the use of CFRP-6 for the reinforced sheets (B), SRPA-1 for the self-reinforced sheet (A), and MTPF-2 for the adhesive resin film to obtain the sheet-shaped material. The resulting sheet-shaped material had the properties as shown in Table 4.

(Example 28)

CFRP-5 was used for the reinforced sheets (B), and SRPP-1 was used for the self-reinforced sheet (A).
Next, these materials were disposed in the order of [(SRPP-1)/(CFRP-5)/(SRPP-1)/(SRPP-1)/(SRPP-1)/(SRPP-1)/(SRP P-1) / (CFRP-5)] in the thickness direction to obtain the preform. The preform was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 4.

(Example 29)

CFRP-6 was used for reinforced sheets (B), and SRPA-1 was used for the self-reinforced sheet (A).
Next, these materials were disposed in the order of [(SRPA-1)/(CFRP-6)/(SRPA-1)/(SRPA-1)/(SRPA-1)/(SRPA-1)/(SRP A-1) / (CFRP-6)] in the thickness direction to obtain the preform. The preform was placed in the cavity of a press-forming mold preheated to 250°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 4.

(Reference Example 30)

The procedure of Example 22 was repeated except for the use of CFRP-7 for the reinforced sheets (B), SRPP-1 for the self-reinforced sheet (A), and MTPF-1 for the adhesive resin film to obtain the sheet-shaped material. The resulting sheet-shaped material had the properties as shown in Table 4.

(Reference Example 31)

The procedure of Example 22 was repeated except for the use of CFRP-8 for the reinforced sheets (B), SRPP-1 for the self-reinforced sheet (A), and MTPF-1 for the adhesive resin film to obtain the sheet-shaped material. The resulting sheet-shaped material had the properties as shown in Table 4.

(Reference Example 32)

The laminate structure and the procedure of Example 22 was employed except for the use of CFRP-9 for the reinforced sheets (B) to obtain the sheet-shaped material. The resulting sheet-shaped material had the properties as shown in Table 5.

(Reference Example 33)

The laminate structure and the procedure of Example 22 was employed except for the use of CFRP-10 for the reinforced sheets (B) to obtain the sheet-shaped material. The resulting sheet-shaped material had the properties as shown in Table 5.

(Example 34)

The laminate structure and the procedure of Example 10 was employed except for the use of CFRP-17 for the reinforced sheets (B) to obtain the sheet-shaped material. The resulting sheet-shaped material had the properties as shown in Table 5.

(Example 35)

The procedure of Example 10 was repeated except for the use of CFRP-17 for the reinforced sheets (B) and SRPP-1 for the self-reinforced sheet (A), and these materials were then disposed in the order of [(SRPP-1)/(SRPP-1)/(CFRP-17)/(SRPP-1)/(CFRP-17)/(SRPP-1)/(S RPP-1)] in the thickness direction to obtain the sheet-shaped material. The resulting sheet-shaped material had the properties as shown in Table 5.

(Example 36)

The procedure and method of Example 1 was repeated except for the use of CFM-5 for the randomly-oriented mat (b-1) of the discontinuous carbon fibers constituting the reinforced sheets (B) and thermoplastic resin film 5 (TPF-5) for the thermoplastic resin (b-2) also constituting the reinforced sheets (B) to obtain the sheet-shaped material. The resulting sheet-shaped material had the properties as shown in Table 5.

(Example 37)

The procedure and method of Example 10 was repeated except for the use of CFM-6 for the randomly-oriented mat (b-1) of the discontinuous carbon fibers constituting the reinforced sheets (B) and thermoplastic resin film 5 (TPF-5) for the thermoplastic resin (b-2) also constituting the reinforced sheets (B) to obtain the sheet-shaped material. The resulting sheet-shaped material had the properties as shown in Table 5.

(Example 38)

The procedure and method of Example 10 was repeated except that CFRP-16 was used for the reinforced sheets and the materials were disposed in the order of [(SRPP-1)/(SRPP-1)/(CFRP-16)/(SRPP-1)/(CFRP-16)/(SRPP-1)/(S RPP-1)] in the thickness direction to obtain the sheet-shaped material. The resulting sheet-shaped material had the properties as shown in Table 5.

(Example 39)

The sheet material obtained in Example 26 was used for the first sheet material and the PP compound sheet was used for the second sheet material. The surface of the first sheet material having the adhesive resin film adhered thereto was brought in contact with the surface of the PP compound sheet and the laminate was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the composite sheet material. The resulting composite sheet material had the properties as shown in Table 6.

(Example 40)

The sheet material obtained in Example 27 was used for the first sheet material and the PA compound sheet was used for the second sheet material. The surface of the first sheet material having the adhesive resin film adhered thereto was brought in contact with the surface of the PA compound sheet and the laminate was placed in the cavity of a press-forming mold preheated to 240°C, and after closing the mold, a pressure of 3 MPa was applied and the pressure was retained for 180 seconds, and cavity temperature was reduced to 50°C with the pressure retained. The mold was then opened to obtain the composite sheet material. The resulting composite sheet material had the properties as shown in Table 6.

(Example 41)

The sheet material obtained in Example 28 was used for the first sheet material, and the PP compound sheet was used for the second sheet material. The (CFRP-5) surface and the PP compound sheet surface in the first sheet material were brought in contact with each other and the procedure of the Example 39 was repeated to obtain the composite sheet material. The resulting composite sheet material had the properties as shown in Table 6.

(Example 42)

The sheet material obtained in Example 29 was used for the first sheet material, and the PA compound sheet was used for the second sheet material. The (CFRP-6) surface and the PA compound sheet surface in the first sheet material were brought in contact with each other and the procedure of the Example 40 was repeated to obtain the composite sheet material. The resulting composite sheet material had the properties as shown in Table 6.

(Comparative Example 1)

8 self-reinforced thermoplastic resin sheets 1 (SRPP-1) were laminated, and adjusted to a thickness of 1 mm. For the adjustment of the thickness, this laminate was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened, and the material was taken out. The resulting material had the properties as shown in Table 7.

(Comparative Example 2)

8 CFRP-1 prepared as the reinforced sheets were laminated, and adjusted to a thickness of 1 mm. This laminate was placed in the cavity of a press-forming mold preheated to 200°C, and after closing the mold, a pressure of 3 MPa was applied and the pressure was retained for 180 seconds, and cavity temperature was reduced to 50°C with the pressure retained. The mold was then opened to obtain the sheet-shaped material. The resulting sheet-shaped material had the properties as shown in Table 7.

(Comparative Example 3)

The sheet material obtained in Comparative Example 1 was used for the first sheet material and the PP compound sheet was used for the second sheet material. The SRPP-1 surface of the first sheet material was brought in contact with the surface of the PP compound sheet, and the composite sheet material was obtained by the method of Example 39. The resulting composite sheet material had the properties as shown in Table 8.

(Comparative Example 4)

The sheet material obtained in Comparative Example 2 was used for the first sheet material and the PA compound sheet was used for the second sheet material. The CFRP-1 surface of the first sheet material was brought in contact with the surface of the PA compound sheet, and the composite sheet material was obtained by the method of Example 40. The resulting composite sheet material had the properties as shown in Table 8.

(Comparative Example 5)

The sheet material obtained in Example 28 was used for the first sheet material and the PP compound sheet was used for the second sheet material. The SRPP-1 surface of the first sheet material was brought in contact with the surface of the PP compound sheet, and the composite sheet material was obtained by the method of Example 39. The resulting composite sheet material had the properties as shown in Table 8.

(Comparative Example 6)

The sheet material obtained in Example 29 was used for the first sheet material and the PA compound sheet was used for the second sheet material. The SRPA-1 surface of the first sheet material was brought in contact with the surface of the PA compound sheet, and the composite sheet material was obtained by the method of Example 40. The resulting composite sheet material had the properties as shown in Table 8.

[Table 1]

| | | | Example 1 | Example 2 | Example 3 | Example 4 | Example 5 | Example 6 | Example 7 |
|---|---|---|---|---|---|---|---|---|---|
| Sheet | Laminate structure | Uppermost layer | - | - | - | - | - | - | - |
| | | Lowermost layer | | | | | | - | - |
| Preform | Laminate structure (order of lamination when the uppermost layer is 1) | 1 | (SRPP-1) | (SRPP-1) | (SRPP-1) | (SRPP-1) | (SRPP-1) | (SRPA-1) | (SRPA-1) |
| | | 2 | (TPF-1) | (CFRP-11) | (TPF-1) | (CFRP-12) | (TPF-3) | (TPF-2) | (CFRP-13) |
| | | 3 | (CFM-1) | (SRPP-1) | (CFM-2) | (SRPP-1) | (CFM-1) | (CFM-1) | (SRPA-1) |
| | | 4 | (SRPP-1) | (SRPP-1) | (SRPP-1) | (SRPP-1) | (SRPP-1) | (SRPA-1) | (SRPA-1) |
| | | 5 | (SRPP-1) | (SRPP-1) | (SRPP-1) | (SRPP-1) | (SRPP-1) | (SRPA-1) | (SRPA-1) |
| | | 6 | (SRPP-1) | (CFRP-11) | (SRPP-1) | (CFRP-12) | (SRPP-1) | (SRPA-1) | (CFRP-13) |
| | | 7 | (CFM-1) | (SRPP-1) | (CFM-2) | (SRPP-1) | (CFM-1) | (CFM-1) | (SRPA-1) |
| | | 8 | (TPF-1) | | (TPF-1) | | (TPF-3) | (TPF-2) | |
| | | 9 | (SRPP-1) | | (SRPP-1) | | (SRPP-1) | (SRPA-1) | |
| | | 10 | | | | | | | |
| | | 11 | | | | | | | |
| Mass mean fiber length of the carbon fiber mat | | mm | 4.94 | 4.94 | 20.5 | 20.5 | 4.94 | 4.94 | 4.94 |
| Fiber dispersion ratio | Value | % | 97 | 97 | 90 | 90 | 97 | 97 | 97 |
| Orientation angle distribution (relative frequency) | Maximum value | - | 0.18 | 0.18 | 0.21 | 0.23 | 0.18 | 0.18 | 0.18 |
| | Minimum value | - | 0.15 | 0.15 | 0.10 | 0.11 | 0.15 | 0.15 | 0.15 |

(continued)

| Mechanical properties | | | Example 1 | Example 2 | Example 3 | Example 4 | Example 5 | Example 6 | Example 7 |
|---|---|---|---|---|---|---|---|---|---|
| | Flexural modulus | GPa | 8.2 | 8.2 | 8.2 | 8.2 | 9.5 | 9.5 | 9.0 |
| | CVb | % | 2.0 | 2.0 | 10.0 | 10.0 | 2.0 | 3.0 | 2.0 |
| | Izod impact strength | J/mm | 4700 | 4700 | 3700 | 3700 | 4800 | 3700 | 3600 |
| | CVi | % | 2.0 | 2.0 | 3.0 | 11.0 | 2.0 | 2.0 | 2.0 |

[Table 2]

| | | | Example 8 | Example 9 | Example 10 | Example 11 | Example 12 | Example 13 | Example 14 | Example 15 |
|---|---|---|---|---|---|---|---|---|---|---|
| Sheet | Laminate structure | Uppermost layer | - | - | (CFRP-5) | (CFRP-6) | - | - | - | - |
| | | | - | - | (TPF-3) | (TPF-4) | - | - | - | - |
| | | Lowermost layer | - | - | (CFM-1) | (CFM-1) | - | - | - | - |
| Preform | Laminate structure (order of lamination when the uppermost layer is 1) | 1 | (SRPA-1) | (SRPA-1) | (SRPP-1) | (SRPA-1) | (SRPP-1) | (CFM-1) | (TPF-1) | (TPF-2) |
| | | 2 | (TPF-2) | (TPF-4) | (CFRP-5) | (CFRP-6) | (TPF-1) | (TPF-1) | (CFM-1) | (CFM-1) |
| | | 3 | (CFM-2) | (CFM-1) | (SRPP-1) | (SRPA-1) | (CFM-1) | (SRPP-1) | (SRPP-1) | (SRPP-1) |
| | | 4 | (SRPA-1) | (SRPA-1) | (SRPP-1) | (SRPA-1) | (SRPP-1) | (SRPP-1) | (SRPP-1) | (SRPP-1) |
| | | 5 | (SRPA-1) | (SRPA-1) | (SRPP-1) | (SRPA-1) | (TPF-1) | (SRPP-1) | (SRPP-1) | (SRPP-1) |
| | | 6 | (SRPA-1) | (SRPA-1) | (CFRP-5) | (CFRP-6) | (CFM-1) | (SRPP-1) | (SRPP-1) | (SRPP-1) |
| | | 7 | (CFM-2) | (CFM-1) | (SRPP-1) | (SRPA-1) | (TPF-1) | (TPF-1) | (CFM-1) | (CFM-1) |
| | | 8 | (TPF-1) | (TPF-4) | | | (SRPP-1) | (CFM-1) | (TPF-1) | (TPF-2) |
| | | 9 | (SRPA-1) | (SRPA-1) | | | (CFM-1) | | | |
| | | 10 | | | | | (TPF-1) | | | |
| | | 11 | | | | | (SRPP-1) | | | |
| Mass mean fiber length of the carbon fiber mat | mm | | 20.5 | 4.94 | 4.94 | 4.94 | 4.94 | 4.94 | 4.94 | 4.94 |
| Fiber dispersion ratio | % | | 90 | 97 | 97 | 97 | 97 | 97 | 97 | 97 |
| Orientation angle distribution (relative frequency) | Value | Maximum value | 0.21 | 0.18 | 0.18 | 0.18 | 0.18 | 0.18 | 0.18 | 0.18 |
| | | Minimum value | 0.10 | 0.15 | 0.15 | 0.15 | 0.15 | 0.15 | 0.15 | 0.15 |

(continued)

| Mechanical properties | | | Example 8 | Example 9 | Example 10 | Example 11 | Example 12 | Example 13 | Example 14 | Example 15 |
|---|---|---|---|---|---|---|---|---|---|---|
| | Flexural modulus | GPa | 8.3 | 10.0 | 9.0 | 9.5 | 9.0 | 9.5 | 10.0 | 11.0 |
| | CVb | % | 12.0 | 3.0 | 3.0 | 2.0 | 2.0 | 2.0 | 2.0 | 2.0 |
| | Izod impact strength | J/mm | 3200 | 3700 | 4700 | 3600 | 4400 | 3600 | 3800 | 3000 |
| | CVi | % | 11.0 | 2.0 | 8.0 | 3.0 | 2.0 | 2.0 | 2.0 | 2.0 |

[Table 3]

| | | | Reference Example 16 | Reference Example 17 | Reference Example 18 | Reference Example 19 | Example 20 | Reference Example 21 | Example 22 | Example 23 |
|---|---|---|---|---|---|---|---|---|---|---|
| Sheet | | | - | - | - | - | - | - | (CFRP-1) | (CFRP-2) |
| Laminate structure | Uppermost layer | | - | - | - | - | - | - | (TPF-1) | (TPF-1) |
| | Lowermost layer | | - | - | - | - | - | - | (CFM-1) | (CFM-2) |
| Preform | | | | | | | | | | |
| Laminate structure (order of lamination when the uppermost layer is 1) | | 1 | (SRPP-1) | (SRPP-1) | (SRPP-1) | (SRPP-1) | (SRPP-1) | (SRPP-1) | (SRPP-1) | (SRPP-1) |
| | | 2 | (TPF-2) | (CFRP-14) | (TPF-1) | (TPF-1) | (CFRP-11) | (CFRP-15) | (CFRP-1) | (CFRP-1) |
| | | 3 | (CFM-5) | (SRPP-1) | (CFM-3) | (CFM-4) | (CFRP-11) | (SRPP-1) | (SRPP-1) | (SRPP-1) |
| | | 4 | (SRPP-1) | (SRPP-1) | (SRPP-1) | (SRPP-1) | (SRPP-1) | (SPRP-1) | (SRPP-1) | (SRPP-1) |
| | | 5 | (SRPP-1) | (SRPP-1) | (SRPP-1) | (SRPP-1) | (SRPP-1) | (SPRP-1) | (SRPP-1) | (SRPP-1) |
| | | 6 | (SRPP-1) | (CFRP-14) | (SRPP-1) | (SRPP-1) | (SRPP-1) | (CFRP-15) | (CFRP-1) | (CFRP-1) |
| | | 7 | (CFM-5) | (SRPP-1) | (CFM-3) | (CFM-4) | (CFRP-11) | (SPRP-1) | (SRPP-1) | (SRPP-1) |
| | | 8 | (TPF-1) | | (TPF-1) | (TPF-1) | (CFRP-11) | | (MTPF-1) | (MTPF-1) |
| | | 9 | (SRPP-1) | | (SRPP-1) | (SRPP-1) | (SRPP-1) | | | |
| | | 10 | | | | | | | | |
| | | 11 | | | | | | | | |
| | Mass mean fiber length of the carbon fiber mat | mm | 4.94 | 4.94 | 50.4 | 20.5 | 4.94 | 50.4 | 4.94 | 20.5 |

EP 3 088 448 B1

(continued)

| | | | Reference Example 16 | Reference Example 17 | Reference Example 18 | Reference Example 19 | Example 20 | Reference Example 21 | Example 22 | Example 23 |
|---|---|---|---|---|---|---|---|---|---|---|
| Fiber dispersion ratio | Value | % | 88 | 91 | 70 | 70 | 97 | 71 | 97 | 90 |
| Orientation angle distribution(relative frequency) | Maximum value | - | 0.31 | 0.31 | 0.31 | 0.33 | 0.18 | 0.31 | 0.18 | 0.21 |
| | Minimum value | - | 0.07 | 0.07 | 0.07 | 0.06 | 0.15 | 0.07 | 0.15 | 0.10 |
| Mechanical properties | Flexural modulus | GPa | 8.0 | 8.0 | 8.2 | 7.8 | 11 | 7.5 | 8.2 | 8.2 |
| | CVb | % | 25.0 | 25.0 | 25.0 | 22.0 | 2.0 | 25.0 | 2.0 | 10.0 |
| | Izod impact strength | J/mm | 3600 | 4300 | 3400 | 3300 | 4000 | 3500 | 4700 | 3800 |
| | CVi | % | 31.0 | 31.0 | 31.0 | 25.0 | 2.0 | 31.0 | 2.0 | 11.0 |

[Table 4]

| | | Example 24 | Example 25 | Example 26 | Example 27 | Example 28 | Example 29 | Reference Example 30 | Reference Example 31 |
|---|---|---|---|---|---|---|---|---|---|
| Sheet | | | | | | | | | |
| Laminate structure | Uppermost layer | (CFRP-3) | (CFRP-4) | (CFRP-5) | (CFRP-6) | (CFRP-5) | (CFRP-6) | (CFRP-7) | (CFRP-8) |
| | Lowermost layer | (TPF-2) | (TPF-2) | (TPF-3) | (TPF-4) | (TPF-3) | (TPF-4) | (TPF-3) | (TPF-1) |
| | | (CFM-1) | (CFM-2) | (CFM-1) | (CFM-1) | (CFM-1) | (CFM-1) | (CFM-3) | (CFM-5) |
| Preform | | | | | | | | | |
| Laminate structure (order of lamination when the uppermost layer is 1) | 1 | (SRPA-1) | (SRPA-1) | (SRPP-1) | (SRPA-1) | (SRPP-1) | (SRPA-1) | (SRPP-1) | (SRPP-1) |
| | 2 | (CFRP-3) | (CFRP-4) | (CFRP-5) | (CFRP-6) | (CFRP-5) | (CFRP-6) | (CFRP-7) | (CFRP-8) |
| | 3 | (SRPA-1) | (SRPA-1) | (SRPP-1) | (SRPA-1) | (SRPP-1) | (SRPA-1) | (SRPP-1) | (SRPP-1) |
| | 4 | (SRPA-1) | (SRPA-1) | (SRPP-1) | (SRPA-1) | (SRPP-1) | (SRPA-1) | (SRPP-1) | (SRPP-1) |
| | 5 | (SRPA-1) | (SRPA-1) | (SRPP-1) | (SRPA-1) | (SRPP-1) | (SRPA-1) | (SRPP-1) | (SRPP-1) |
| | 6 | (CFRP-3) | (CFRP-4) | (CFRP-5) | (CFRP-6) | (CFRP-5) | (CFRP-6) | (CFRP-7) | (CFRP-8) |
| | 7 | (SRPA-1) | (SRPA-1) | (SRPP-1) | (SRPA-1) | (SRPP-1) | (SRPA-1) | (SRPP-1) | (SRPP-1) |
| | 8 | (MTPF-2) | (MTPF-2) | (MTPF-1) | (MTPF-2) | (CFRP-5) | (CFRP-6) | (MTPF-1) | (MTPF-1) |
| | 9 | | | | | | | | |
| | 10 | | | | | | | | |
| | 11 | | | | | | | | |
| Mass mean fiber length fiber mat of the carbon | mm | 4.94 | 20.5 | 4.94 | 4.94 | 4.94 | 4.94 | 50.4 | 4.94 |

(continued)

| | | | Example 24 | Example 25 | Example 26 | Example 27 | Example 28 | Example 29 | Reference Example 30 | Reference Example 31 |
|---|---|---|---|---|---|---|---|---|---|---|
| Fiber dispersion ratio | Value | % | 97 | 90 | 97 | 97 | 97 | 97 | 70 | 88 |
| Orientation angle distribution (relative frequency) | Maximum value | - | 0.18 | 0.21 | 0.18 | 0.18 | 0.18 | 0.18 | 0.31 | 0.31 |
| | Minimum value | - | 0.15 | 0.10 | 0.15 | 0.15 | 0.15 | 0.15 | 0.07 | 0.07 |
| Mechanical properties | Flexural modulus | GPa | 9.0 | 8.3 | 13.0 | 11.0 | 12.0 | 11.4 | 8.5 | 7.8 |
| | CVb | % | 3.0 | 12.0 | 3.0 | 2.0 | 4.0 | 2.0 | 25.0 | 25.0 |
| | Izod impact strength | J/mm | 3400 | 3200 | 4000 | 3600 | 4000 | 3600 | 3500 | 3600 |
| | CVi | % | 2.0 | 11.0 | 8.0 | 3.0 | 5.0 | 5.0 | 31.0 | 31.0 |

[Table 5]

| | | | Reference Example 32 | Reference Example 33 | Example 34 | Example 35 | Example 36 | Example 37 | Example 38 |
|---|---|---|---|---|---|---|---|---|---|
| Sheet | | | (CFRP-9) | (CFRP-10) | (CFRP-17) | (CFRP-17) | - | (CFRP-16) | (CFRP-16) |
| Laminate structure | | Uppermost layer | (TPF-3) | (TPF-3) | (TPF-6) | (TPF-6) | - | (TPF-5) | (TPF-5) |
| | | Lowermost layer | (CFM-4) | (CFM-5) | (CFM-6) | (CFM-6) | - | (CFM-6) | (CFM-6) |
| Preform | | | | | | | | | |
| Laminate structure (order of lamination when the uppermost layer is 1) | | 1 | (SRPP-1) | (SRPP-1) | (SRPP-1) | (SRPP-1) | (SRPP-1) | (SRPP-1) | (SRPP-1) |
| | | 2 | (CFRP-9) | (CFRP-10) | (CFRP-17) | (SRPP-1) | (TPF-5) | (CFRP-16) | (SRPP-1) |
| | | 3 | (SRPP-1) | (SRPP-1) | (SRPP-1) | (CFRP-17) | (CFM-6) | (SRPP-1) | (CFRP-16) |
| | | 4 | (SRPP-1) | (SRPP-1) | (SRPP-1) | (SRPP-1) | (SRPP-1) | (SRPP-1) | (SRPP-1) |
| | | 5 | (SRPP-1) | (SRPP-1) | (SRPP-1) | (CFRP-17) | (SRPP-1) | (SRPP-1) | (CFRP-16) |
| | | 6 | (CFRP-9) | (CFRP-10) | (CFRP-17) | (SRPP-1) | (SRPP-1) | (CFRP-16) | (SRPP-1) |
| | | 7 | (SRPP-1) | (SRPP-1) | (SRPP-1) | (SRPP-1) | (CFM6-1) | (SRPP-1) | (SRPP-1) |
| | | 8 | (MTPF-1) | (MTPF-1) | | | (TPF-5) | | |
| | | 9 | | | | | (SRPP-1) | | |
| | | 10 | | | | | | | |
| | | 11 | | | | | | | |
| Mass mean fiber leng fiber mat th of the carbon | | mm | 20.5 | 4.94 | 4.94 | 4.94 | 4.94 | 4.94 | 4.94 |
| Fiber dispersion ratio | Value | % | 73 | 88 | 97 | 97 | 97 | 97 | 97 |

(continued)

| | | | Reference Example 32 | Reference Example 33 | Example 34 | Example 35 | Example 36 | Example 37 | Example 38 |
|---|---|---|---|---|---|---|---|---|---|
| Orientation angle distribution (relative frequency) | Maximum value | - | 0.33 | 0.36 | 0.18 | 0.18 | 0.18 | 0.18 | 0.18 |
| | Minimum value | - | 0.06 | 0.05 | 0.15 | 0.15 | 0.15 | 0.15 | 0.15 |
| Mechanical properties | Flexural modulus | GPa | 8.6 | 8.7 | 10.0 | 7.0 | 8.5 | 8.5 | 8.0 |
| | CVb | % | 38.0 | 26.0 | 4.0 | 3.0 | 2.0 | 2.0 | 2.0 |
| | Izod impact strength | J/mm | 3300 | 3600 | 4400 | 4700 | 5000 | 5000 | 5300 |
| | CVi | % | 35.0 | 30.0 | 3.0 | 2.0 | 2.0 | 2.0 | 2.0 |

# EP 3 088 448 B1

[Table 6]

|  |  |  | Example 39 | Example 40 | Example 41 | Example 42 |
|---|---|---|---|---|---|---|
| First sheet material |  |  |  |  |  |  |
|  | Sheet material used |  | Example 26 | Example 27 | Example 28 | Example 29 |
|  | Adhesive surface |  | (MTPF-1) side | (MTPF-2) side | (CFRP-5) side | (CFRP-6) side |
| Second sheet material |  |  | PP compound sheet | PA compound sheet | PP compound sheet | PA compound sheet |
| Composite sheet material |  |  |  |  |  |  |
|  | Tensile shear strength ($\tau 2$) | MPa | Fracture of the PP compound sheet | Fracture of the PA compound sheet | 15 | 17 |

[Table 7]

|  |  |  |  | Comparative Example 1 | Comparative Example 2 |
|---|---|---|---|---|---|
| Sheet |  |  |  | - | (A-2) |
|  | Laminate structure |  | Uppermost layer | (SRPP-1) | (TPF-1) |
|  |  |  | Lowermost layer | (SRPP-1) | (CFM-1) |
| Sheet material |  |  |  |  |  |
|  | Laminate structure (order of lamination when the uppermost layer is 1) |  | 1 | (SRPP-1) | (CFRP-1) |
|  |  |  | 2 | (SRPP-1) | (CFRP-1) |
|  |  |  | 3 | (SRPP-1) | (CFRP-1) |
|  |  |  | 4 | (SRPP-1) | (CFRP-1) |
|  |  |  | 5 | (SRPP-1) | (CFRP-1) |
|  |  |  | 6 | (SRPP-1) | (CFRP-1) |
|  |  |  | 7 | (SRPP-1) | (CFRP-1) |
|  |  |  | 8 | (SRPP-1) | (CFRP-1) |
|  | Random mat of discontinuous carbon fibers |  | mm | - | 4.94 |
|  | Fiber dispersion ratio | Value | % | - | 97 |
|  | Orientation angle distribution (relative frequency) | Maximum value | - | - | 0.18 |
|  |  | Minimum value | - | - | 0.15 |
|  | Mechanical properties | Flexural modulus | GPa | 5.0 | 12.0 |
|  |  | CVb | % | 2.0 | 2.0 |
|  |  | Izod impact strength | J/m | 4400.0 | 500.0 |
|  |  | CVi | % | 2.0 | 2.0 |

[Table 8]

| | | Comparative Example 3 | Comparative Example 4 | Comparative Example 5 | Comparative Example 6 |
|---|---|---|---|---|---|
| First sheet material | | | | | |
| | Sheet material used | Comparative Example 1 | Comparative Example 2 | Example 28 | Example 29 |
| | Adhesive surface | - | - | (SRPP-1) side | (SRPA-1) side |
| Second sheet material | | PP compound sheet | PA compound sheet | PP compound sheet | PA compound sheet |
| Composite sheet material | | | | | |
| Tensile shear strength ($\tau$2) | Mpa | 7 | 8 | 7 | 8 |

In the Examples 1 to 15, 20, 22 to 29 and 34 to 38 as described above, sheet-shaped materials each having excellent balance between the rigidity and the impact resistance could be obtained by realizing the synergetic effects of the rigidity of the sheet-shaped material comprising the thermoplastic resin reinforced with discontinuous carbon fibers and the impact resistance of the sheet-shaped material comprising the self-reinforced thermoplastic resin. In addition, in the case of the Examples 1, 3, 5, 6, and 8 to 15, a consistent sheet-shaped material having reduced variety in the rigidity and the impact resistance could be produced by the discontinuous carbon fibers having satisfactory mass mean fiber length and fiber dispersion ratio.

In the Examples 2, 4, 7 and 20 prepared by using different thickness of the sheet-shaped and different production temperature from the Examples 1, 3, 5, 6, and 8 to 15, sheet-shaped materials each having excellent balance between the rigidity and the impact resistance could be obtained as in the case of the Examples 1, 3, 5, 6, and 8 to 15, and this means that the sheet-shaped material can be produced with high design freedom when requirements such as mass mean fiber length and fiber dispersion ratio are satisfied.

On the contrary, Comparative Examples 1 and 2 failed to produce a sheet-shaped material having satisfactory balance between the rigidity and the impact resistance. Of the materials produced, the sheet-shaped materials comprising solely SRPP-1 or CFRP-1 were insufficient in practicality due to the lack of the balance between the impact resistance and the rigidity.

In addition, in Examples 39 to 42 having the second sheet material integrated therewith, excellent bond by adhesion with other material was realized. In particular, in the case of the composite sheet materials of Examples 39 and 40 having the adhesive resin adhered to the adhesion surface, the adhesion was so high that it was the side of the other material that was fractured. In the case of Examples 41 and 42 which are sheet materials having an adhesive resin mixed in the thermoplastic resin in the sheet comprising the randomly-oriented mat of the discontinuous carbon fibers and the thermoplastic resin, composite sheet materials having excellent adhesion were obtained even though the adhesion was not as strong as that resulted in the fracture of the other material.

On the other hand, the adhesion strength was low in Comparative Examples 3 to 6 due to the absence of the adhesive resin on the adhesion surface.

Of the Examples, a sheet material with outstanding balance of properties could be realized in Example 36 by adjusting the amount of the unmodified and modified polypropylenes in consideration of the adhesion to the carbon fiber mat and the balance between the impact resistance properties and the rigidity after preparation into a discontinuous carbon fiber-reinforced thermoplastic resin sheet.

In the sheet materials of Examples 37 and 38 prepared by using the discontinuous carbon fiber-reinforced sheet (CFRP-16) using the randomly-oriented mat 6 (CFM-6) and the thermoplastic resin film 6 (TPF-6) the same as that of Example 36, either the impact resistance or the rigidity could be realized at a very high level while retaining the good balance between the impact resistance properties and the rigidity. As described above, use of the preform and the sheet material of the present invention enabled realization of the particularly required properties while retaining the desired properties.

Industrial Applicability

The preform and the sheet material of the present invention have excellent shapability in the processing since they comprise a laminate of a reinforced sheets composed of a randomly-oriented mat of the discontinuous carbon fibers having excellent shapability and a self-reinforced sheet composed of a thermoplastic resin having excellent mold followability. In addition, when the preform and the sheet material of the present invention satisfy the dispersion ratio and the orientation angle distribution of the of the discontinuous carbon fibers, they enjoy consistency of the properties in addition to the impact resistance inherent to the self-reinforced sheet and the rigidity inherent to the reinforced sheet constituted from the discontinuous carbon fibers and the thermoplastic resin. Accordingly, the article prepared by processing the preform and the sheet material of the present invention are preferable for use in wide applications such as automobile interior and exterior materials, electric and electronic housing, structural members of the bicycle and sport gear, aircraft interior and exterior materials, box used in transportation, and everyday item.

Explanation of Numerals

1, 2, 3, 4, 5, 6 carbon fiber (single fiber)
10A, 10B, 10C, 10D, 10E, 10 g, 10H, 10I, 10L, 10M preform
11 randomly-oriented mat (b-1) of discontinuous carbon fibers
12 thermoplastic resin (b-2)
13 reinforced sheets (B-2) which is the randomly-oriented mat impregnated with the thermoplastic resin film
13A, 13B, 13C reinforced sheets (B-1)
14 sheet of adhesive resin (C)
15 self-reinforced sheet (A)
18 second sheet material
19 notch
20, 20A sheet material
30 composite sheet material
θ two-dimensional contact angle

**Claims**

1. A preform comprising:

   (A) a self-reinforced sheet comprising (a-1) a thermoplastic resin and (a-2) a fiber or tape made of a thermoplastic resin which is the same type as the thermoplastic resin (a-1), the self-reinforced sheet (A) being reinforced with the fiber or tape (a-2); and
   (B) a reinforced sheet comprising (b-1) a randomly-oriented mat of discontinuous carbon fibers and (b-2) a thermoplastic resin,

   wherein
   the self-reinforced sheet (A) and the reinforced sheet (B) are laminated one on another,
   each thermoplastic resin serving as a matrix resin of the preform, and
   wherein
   in the randomly-oriented mat (b-1), the discontinuous carbon fibers are dispersed at a dispersion ratio of at least 90%, and maximum value of a relative frequency of orientation angle distribution of the discontinuous carbon fibers is less than 0.25 and minimum value of the relative frequency of the orientation angle distribution of the discontinuous carbon fibers is at least 0.090.

2. The preform according to claim 1, wherein
   the reinforced sheet (B) is the randomly-oriented mat (b-1) of the discontinuous carbon fibers impregnated with the thermoplastic resin (b-2).

3. The preform according to claim 1, wherein
   the randomly-oriented mat (b-1) of the discontinuous carbon fibers is located between the thermoplastic resin (b-2) and the self-reinforced sheet (A).

4. The preform according to any one of claims 1 to 3, wherein
   two or more self-reinforced sheets (A), and

two or more reinforced sheets (B) are laminated one on another.

5. The preform according to any one of claims 1 to 4, wherein
the discontinuous carbon fiber has a mean fiber length of up to 50 mm.

6. The preform according to any one of claims 1 to 5, wherein
the thermoplastic resin (b-2) constituting the reinforced sheet (B) is a resin selected from the group consisting of polyolefin resin, polyamide resin, polyarylene sulfide resin, and polyester resin.

7. The preform according to claim 6, wherein
the thermoplastic resin (b-2) constituting the reinforced sheets (B) is a polyolefin resin.

8. The preform according to any one of claims 1 to 7, wherein
both of the thermoplastic resin (a-1) and the fiber or tape (a-2) constituting the self-reinforced sheet (A) are respectively a polyolefin resin.

9. The preform according to any one of claims 1 to 8, wherein
the thermoplastic resin (a-1) has a peak melting temperature lower than the fiber or tape (a-2).

10. A sheet material prepared by integrating the preforms according to any one of claims 1 to 9 by lamination.

11. A sheet material prepared by laminating a plurality of sheet materials according to claim 10.

12. The sheet material according to claim 10 or 11, wherein the reinforced sheet (B) has a thickness of up to 500 $\mu$m.

13. A composite sheet material comprising:

the sheet material according to any one of claims 10 to 12, and
a second sheet material.

14. The composite sheet material according to claim 13, wherein
the second sheet material is a sheet containing a thermoplastic resin as its matrix resin.


**Patentansprüche**

1. Vorformling, der Folgendes umfasst:

(A) eine selbstverstärkte Platte, umfassend (a-1) ein thermoplastisches Harz und (a-2) eine Faser oder ein Band aus einem thermoplastischen Harz, das vom gleichen Typ ist wie das thermoplastische Harz (a-1), wobei die selbstverstärkte Platte (A) mit der Faser oder dem Band (a-2) verstärkt ist; und
(B) eine verstärkte Platte, umfassend (b-1) eine zufällig orientierte Matte aus diskontinuierlichen Kohlenstofffasern und (b-2) ein thermoplastisches Harz,

wobei:
die selbstverstärkte Platte (A) und die verstärkte Platte (B) aufeinander laminiert sind, wobei jedes thermoplastische Harz als ein Matrixharz des Vorformlings dient und wobei:
in der zufällig orientierten Matte (b-1) die diskontinuierlichen Kohlenstofffasern bei einem Dispersionsverhältnis von zumindest 90 % dispergiert sind, und ein Maximalwert einer relativen Häufigkeit der Orientierungswinkelverteilung der diskontinuierlichen Kohlenstofffasern kleiner ist als 0,25 und ein Minimalwert der relativen Häufigkeit der Orientierungswinkelverteilung der diskontinuierlichen Kohlenstofffasern zumindest 0,090 beträgt.

2. Vorformling nach Anspruch 1, wobei die verstärkte Platte (B) die zufällig orientierte Matte (b-1) der diskontinuierlichen Kohlenstofffasern ist, die mit dem thermoplastischen Harz (b-2) imprägniert sind.

3. Vorformling nach Anspruch 1, wobei die zufällig orientierte Matte (b-1) der diskontinuierlichen Kohlenstofffasern zwischen dem thermoplastischen Harz (b-2) und der selbstverstärkten Platte (A) angeordnet ist.

**4.** Vorformling nach einem der Ansprüche 1 bis 3, wobei zwei oder mehr selbstverstärkte Platten (A) und zwei oder mehr verstärkte Platten (B) aufeinander laminiert sind.

**5.** Vorformling nach einem der Ansprüche 1 bis 4, wobei die diskontinuierliche Kohlenstofffaser eine mittlere Faserlänge von bis zu 50 mm aufweist.

**6.** Vorformling nach einem der Ansprüche 1 bis 5, wobei das thermoplastische Harz (b-2), aus dem die verstärkte Platte (B) besteht, ein Harz ist, das aus der aus Polyolefinharz, Polyamidharz, Polyarylensulfidharz und Polyesterharz bestehenden Gruppe ausgewählt ist.

**7.** Vorformling nach Anspruch 6, wobei das thermoplastische Harz (b-2), aus dem die verstärkten Platten (B) bestehen, ein Polyolefinharz ist.

**8.** Vorformling nach einem der Ansprüche 1 bis 7, wobei das thermoplastische Harz (a-1) und die Faser oder das Band (a-2), aus denen die selbstverstärkte Platte (A) besteht, jeweils ein Polyolefinharz ist.

**9.** Vorformling nach einem der Ansprüche 1 bis 8, wobei das thermoplastische Harz (a-1) eine Peak-Schmelztemperatur aufweist, die niedriger ist als jene der Faser oder des Bands (a-2).

**10.** Plattenmaterial, hergestellt durch Integrieren von Vorformlingen nach einem der Ansprüche 1 bis 9 durch Laminieren.

**11.** Plattenmaterial, hergestellt durch Laminieren einer Vielzahl von Plattenmaterialien nach Anspruch 10.

**12.** Plattenmaterial nach Anspruch 10 oder 11, wobei die verstärkte Platte (B) eine Dicke von bis zu 500 $\mu$m aufweist.

**13.** Verbund-Plattenmaterial, umfassend:

ein Plattenmaterial nach einem der Ansprüche 10 bis 12 und
ein zweites Plattenmaterial.

**14.** Verbund-Plattenmaterial nach Anspruch 13, wobei das zweite Plattenmaterial eine Platte ist, die ein thermoplastisches Harz als dessen Matrixharz enthält.

## Revendications

**1.** Préforme comprenant :

(A) une feuille auto-renforcée comprenant (a-1) une résine thermoplastique et (a-2) une fibre ou un ruban composé(e) d'une résine thermoplastique qui est du même type que la résine thermoplastique (a-1), la feuille auto-renforcée (A) étant renforcée par la fibre ou le ruban (a-2) ; et
(B) une feuille renforcée comprenant (b-1) un mat à orientation aléatoire de fibres de carbone discontinues et (b-2) une résine thermoplastique,

dans laquelle
la feuille auto-renforcée (A) et la feuille renforcée (B) sont stratifiées l'une sur l'autre,
chaque résine thermoplastique servant de résine de matrice de la préforme, et
dans laquelle
dans le mat à orientation aléatoire (b-1), les fibres de carbone discontinues sont dispersées à un taux de dispersion d'au moins 90 %, et une valeur maximum d'une fréquence relative de distribution d'angle d'orientation des fibres de carbone discontinues est inférieure à 0,25 et une valeur minimum de la fréquence relative de la distribution d'angle d'orientation des fibres de carbone discontinues est d'au moins 0,090.

**2.** Préforme selon la revendication 1, dans laquelle
la feuille renforcée (B) est le mat à orientation aléatoire (b-1) des fibres de carbone discontinues imprégné de la résine thermoplastique (b-2).

**3.** Préforme selon la revendication 1, dans laquelle

le mat à orientation aléatoire (b-1) des fibres de carbone discontinues est situé entre la résine thermoplastique (b-2) et la feuille auto-renforcée (A).

4. Préforme selon l'une quelconque des revendications 1 à 3, dans laquelle
   deux feuilles auto-renforcées (A) ou plus, et
   deux feuilles renforcées (B) ou plus sont stratifiées les unes sur les autres.

5. Préforme selon l'une quelconque des revendications 1 à 4, dans laquelle
   la fibre de carbone discontinue a une longueur de fibre moyenne allant jusqu'à 50 mm.

6. Préforme selon l'une quelconque des revendications 1 à 5, dans laquelle
   la résine thermoplastique (b-2) constituant la feuille renforcée (B) est une résine choisie dans le groupe comprenant une résine de polyoléfine, une résine de polyamide, une résine de sulfure de polyarylène et une résine de polyester.

7. Préforme selon la revendication 6, dans laquelle
   la résine thermoplastique (b-2) constituant les feuilles renforcées (B) est une résine de polyoléfine.

8. Préforme selon l'une quelconque des revendications 1 à 7, dans laquelle
   la résine thermoplastique (a-1) et la fibre ou le ruban (a-2) constituant la feuille auto-renforcée (A) sont respectivement une résine de polyoléfine.

9. Préforme selon l'une quelconque des revendications 1 à 8, dans laquelle
   la résine thermoplastique (a-1) a une température de fusion maximum inférieure à la fibre ou au ruban (a-2).

10. Matériau en feuille préparé en intégrant les préformes selon l'une quelconque des revendications 1 à 9 par stratification.

11. Matériau en feuille préparé en stratifiant une pluralité de matériaux en feuille selon la revendication 10.

12. Matériau en feuille selon la revendication 10 ou 11, dans lequel
    la feuille renforcée (B) a une épaisseur allant jusqu'à 500 $\mu$m.

13. Matériau en feuille composite comprenant :

    le matériau en feuille selon l'une quelconque des revendications 10 à 12, et
    un second matériau en feuille.

14. Matériau en feuille composite comprenant :

    le matériau en feuille selon la revendication 13, dans lequel
    le second matériau en feuille est une feuille contenant une résine thermoplastique en tant que résine de matrice.

# FIG.1

13A

12

11

1-(a)

13B

11

12

1-(b)

13C

12

11

12

1-(c)

# FIG.2

2-(a)

2-(b)

2-(c)

2-(d)

# FIG.3

3-(a)

3-(b)

# FIG.4

10L

15
11
12
15
15
15
12
11
15

# FIG.5

10M

15
13
15
15
15
13
15

# FIG.6

# FIG.7

# FIG.8

# FIG.9

# FIG.10

# FIG.11

# FIG.12

# FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012240401 A
- US 20130052897 A1
- WO 5013543 A

- JP 2012139841 A
- JP HEI2231128 B

**Non-patent literature cited in the description**

- **I. TAKETA et al.** Interply hybrid composites with carbon fiber reinforced polypropylene and self-reinforced polypropylene. *Composites: Part A,* 2010, vol. 41, 927-932

- **P.J. HINE ; I.M. WARD.** Hot Compaction of Woven Nylon 6, 6 Multifilaments. *Journal of Applied Polymer Science,* 2006, vol. 101, 991-997